(19) Europäisches Patentamt
European Patent Office
Office européen des brevets

(11) EP 2 910 590 B1

(12) **EUROPEAN PATENT SPECIFICATION**

(45) Date of publication and mention of the grant of the patent:
**04.12.2019 Bulletin 2019/49**

(51) Int Cl.:
*C08G 73/02* (2006.01) *H01G 11/04* (2013.01)
*H01M 10/052* (2010.01)

(21) Application number: **14305254.6**

(22) Date of filing: **24.02.2014**

(54) **New lithium-doped Pernigraniline-based materials, their methods of preparation and their uses in various applications**

Neue lithiumdotierte pernigranilinbasierte Materialien, Verfahren zu ihrer Herstellung und ihre Verwendungen in verschiedenen Anwendungen

Nouveaux matériaux à base de pernigraniline dopés au lithium, leurs procédés de préparation et leurs utilisations dans des applications diverses

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**26.08.2015 Bulletin 2015/35**

(73) Proprietors:
- **Centre National de la Recherche Scientifique 75016 Paris (FR)**
- **UNIVERSITE DE NANTES 44000 Nantes (FR)**
- **Université de Picardie Jules Verne 80025 Amiens Cedex 1 (FR)**

(72) Inventors:
- **Gaubicher, Joël 44000 NANTES (FR)**
- **Jimenez Manero, Pablo 44000 NANTES (FR)**
- **Lestriez, Bernard 44000 NANTES (FR)**
- **Bonnet, Jean-Pierre 75116 PARIS (FR)**
- **Guyomard, Dominique 44880 SAUTRON (FR)**

(74) Representative: **Lavoix**
**2, place d'Estienne d'Orves**
**75441 Paris Cedex 09 (FR)**

(56) References cited:
**US-A1- 2005 084 660**

- **YAN SUN ET AL: "Polyaniline: synthesis and characterization of pernigraniline base", JOURNAL OF THE CHEMICAL SOCIETY, CHEMICAL COMMUNICATIONS, no. 7, 1 January 1990 (1990-01-01), page 529, XP055136047, ISSN: 0022-4936, DOI: 10.1039/c39900000529**
- **MANUEL J ET AL: "Electrosprayed polyaniline as cathode material for lithium secondary batteries", MATERIALS RESEARCH BULLETIN, ELSEVIER, KIDLINGTON, GB, vol. 45, no. 3, 1 March 2010 (2010-03-01), pages 265-268, XP026904904, ISSN: 0025-5408, DOI: 10.1016/J.MATERRESBULL.2009.12.021 [retrieved on 2010-02-11]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 910 590 B1

Printed by Jouve, 75001 PARIS (FR)

## Description

The present invention relates to a new lithium-doped Pernigraniline-based material, a method for the preparation thereof, its use in various applications, an electrode comprising said lithium-doped Pernigraniline-based material and its preparation method, a membrane comprising said lithium-doped Pernigraniline-based material and its preparation method, and an electrochemical storage system (such as a battery or a supercapacitor) comprising said electrode.

Batteries comprising a positive electrode and a negative electrode separated by an electrolyte comprising a lithium salt in solution in a solvent are widely known. The operation of these batteries is provided by the reversible circulation of lithium ions in the electrolyte between the electrodes. The positive electrode is generally composed of a composite material comprising an active material such as lithium cobaltate ($LiCoO_2$) or lithium manganate ($LiMn_2O_4$), a binder such as polyvinylidenedifluoride (PVdF), and a carbon additive such as carbon black. The binder is generally used to maintain mechanical strain and limit the volume expansion upon cycling, and the carbon material is a material conferring electronic conduction. The negative electrode is generally composed of lithium metal or of an intercalated lithium compound.

In the field of electrochemical storage systems, the properties of the electrodes comprised in said systems are an important element as regards their overall performance. In order for a material to be able to be used as an active material or as an additive in said electrodes, it is desirable for it to have a high electronic conductivity and good electrochemical stability.

In recent years, batteries having a high energy density have come to be required, and research has been conducted on conducting polymers such as polyaniline, polythiophene or polypyrrole as polymer positive electrode materials or as binders. Indeed, the theoretical capacity of these polymer positive electrode materials is from 100 to 150 Ah/kg, and they generally display high electronic conductivity.

More particularly, polyaniline (PANi) has been extensively studied for use as a battery material. This organic conductor has good redox reversibility and high environmental stability. The use of conducting polymers as electrodes in batteries relies on the electrochemical redox processes. A given conductive polymer can be repeatedly cycled between different oxidation states, thereby acting as a reversible electrode for a rechargeable battery.

Neutral PANi exists under the following different forms:

- the fully reduced form also called Leucoemeraldine (LE) which comprises about 100 mole% of N-H bonds (i.e. amine groups);

- the half-oxidized form also called Emeraldine (E) which comprises about 50 mole% of amine groups and about 50 mole% of C=N double bonds (i.e. imine groups); and

- the fully oxidized form also called Pernigraniline (PN) which comprises about 100 mole% of imine groups.

It is noted that Emeraldine and Pernigraniline can be in a deprotonated form (i.e. base form) which respectively leads to the following Emeraldine base (EB) and Pernigraniline Base (PNB) chemical formulae:

EB 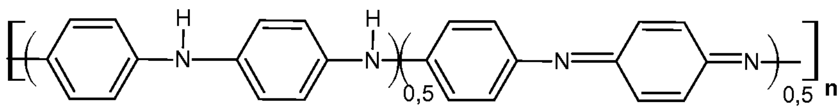

PNB 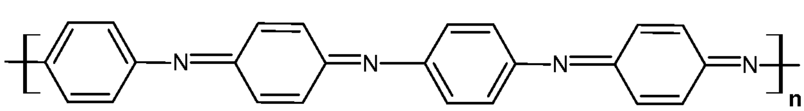

Emeraldine and Pernigraniline can also be in a protonated form (i.e. salt form, A being the counter anion) which respectively leads to the following Emeraldine salt (ES) and Pernigraniline Salt (PNS) chemical formulae:

ES 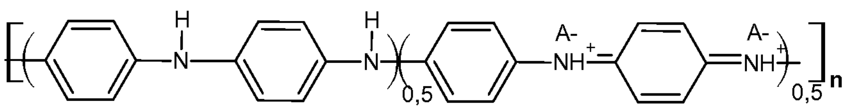

PNS

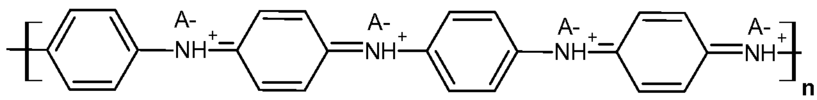

Although the Leucoemeraldine and Emeraldine forms of polyaniline have been known and prepared for eighty years, the Pernigraniline form has only been successfully synthesized since the early nineties. As an example, Sun et al. [J. Chem. Soc., Chem. Comm., 1990, 529] described a method for the preparation of the Pernigraniline base form comprising a step of dissolving EB in *N*-methyl-pyrrolidinone (NMP) and glacial acetic acid, then a step of adding a solution comprising m-chloroperbenzoic acid and glacial acetic acid to the preceding reaction mixture, and then a step of adding triethylamine in the preceding reaction mixture to recover a precipitate. The precipitate is filtered and washed several times to obtain an analytically pure powder of PNB which displays 97 mole% of imine groups. However, this method has the drawback of leading to only tiny amounts of pure PNB. In addition, it has also been reported that this completely oxidized form of polyaniline (i.e. Pernigraniline) cannot be isolated and it decomposes while drying during its synthesis by oxidation of Emeraldine in aqueous acid media.

It is noted that Pernigraniline base cannot be obtained *in situ* by the implementation of a lithium battery comprising emeraldine as cathode, lithium metal as anode and a non-aqueous electrolyte since the transfer of protons is not probable to achieve electron neutrality during the redox process. Therefore, Pernigraniline base is unlikely to be formed in the non-aqueous electrolyte.

Recently, various dopants (e.g. polymeric counter-anions, metallic ionic salts, sulfonic acids, etc...) have been used to improve physical and chemical properties of the stable Emeraldine (ES or EB) form of PANi. Among them, lithium ionic salts such as $LiClO_4$, $LiBF_4$, $LiPF_6$ and zinc ionic salts such as $Zn(ClO_4)_2$ were received much more attention and their application in rechargeable lithium ion batteries has been studied. As an example, Manuel et al. [Material Research Bulletin, 2010, 45, 265] studied the electrochemical properties of a lithium-doped EB film as a positive electrode in a Li/polyaniline cell. The lithium-doped EB film comprises approximately an equal amount of amine groups and imine groups.

The following scheme (1) shows the doping reaction of EB, with (x+y) being equal to about 0.5. Thus, the hydrogen (H)/nitrogen(N) atomic ratio in EB or EB-Li is about 4.5.

EB

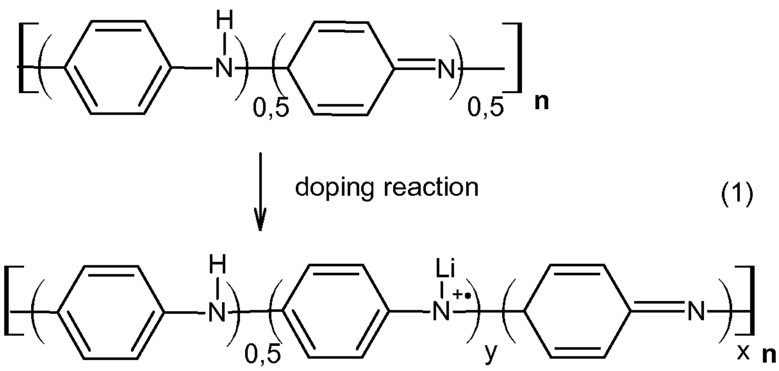


(1)

EB-Li

The method described to prepare the lithium-doped EB material comprises a first step of immersing an EB powder in 1M lithium salt ($LiPF_6$) solution in an equivolume mixture of ethylene carbonate and dimethyl carbonate, then a second step of washing, and then a third step of drying to obtain the Li-doped EB material. The electrochemical cell consisted of a mixture of the Li-doped EB material, carbon black and PVdF in a 70:20:10 weight ratio as cathode, lithium metal as anode, and EC:DMC (1:1, v/v) in 1M $LiPF_6$ as electrolyte solution. It was found that the obtained cathode displayed a specific capacity value on discharge of 142.5 mAh/g related to the EB mass. However, it has a poor cyclability since a 39% decrease of the discharge capacity is observed after 50 cycles.

Consequently, an alternative polymer material which displays high chemical and physical performances (e.g. electrochemical properties and chemical stability) and can be used either as a polymer positive electrode material, as a conducting agent or as a binder without the above disadvantages is highly desirable.

More particularly, a first aim of the present invention is to provide a polymer material which is able to deliver a specific energy density superior to any of the prior art polymer materials and which combines a good electronic conductivity, a good ionic conductivity and a high stability during cycling. In addition, a second aim of the present invention is to provide a simple and economic preparation method which leads to a versatile polymer material displaying high chemical and physical performances.

This objective is achieved by the new lithium-doped Pernigraniline-based material which is described below.

A first object of the present invention is a lithium-doped Pernigraniline-based material (PN-Li), comprising:

- at least one polymer chain formed by the succession of $C_6H_4$ rings and nitrogen atoms, each nitrogen atom being linked in para position relative to each $C_6H_4$ ring;
- n repeating units;
- a total amount X of lithium cations ($Li^+$);
- an average amount x of lithium cations ($Li^+$) per repeating unit, with x = X/n;
- a total amount Y of anions ($A^{m-}$);
- an average amount y of charge provided by anions ($A^{m-}$) per repeating unit, with y = mY/n;
- a charge q of each repeating unit,
- a total charge Q of the polymer chain, with $Q=\sum^{n} q_i$ , and Q = mY-X since Q is compensated by the charges of $Li^+$ and $A^{m-}$;
- Q/n represents the formal oxidation state and Q/n = y-x; and

wherein said PN-Li responds to the following formula (I):

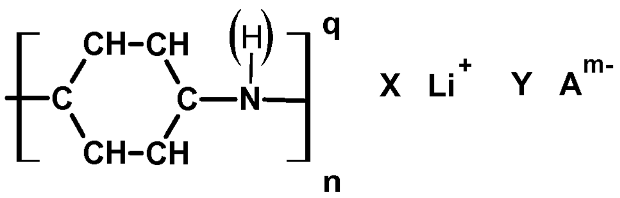

(I)

in which:

* $4 \leq n \leq 500{,}000$, and preferably $100 \leq n \leq 10{,}000$,

* q is equal to -1, 0 or +1,

* the atomic ratio hydrogen/nitrogen (H/N) is such that $4 \leq H/N < 4.5$, and preferably such that $4 \leq H/N < 4.4$,

* $-1 \leq Q/n < 0$,

* $0.5 \leq x \leq 1$, and preferably $0.5 \leq x \leq 0.8$,

* $0 \leq y \leq 0.5$.

Astonishingly, the lithium-doped Pernigraniline-based material of the present invention denoted PN-Li is able to exchange reversibly up to 1 electron of charge for every $-C_6H_4N-$ group (aniline repeating unit in the polymer chain) in a lithium electrolyte at a relatively high potential, which makes this material able to deliver an specific energy density superior to any other polymer materials. In addition, the highly electrical conducting nature of this material favors the kinetics of the charge and discharge processes, which makes this material useful as an additive to inorganic active materials, especially in the case of active materials with low conductivity. The most remarkable property of this material is its high stability during cycling at a broad potential window for a large number of cycles. Lastly, it shows unexpected and remarkable mechanical properties which make it a very versatile polymer material able to be prepared in many forms (membranes, coatings, thick films, etc...).

In a preferred embodiment, lithium cations are coordinated to the nitrogen atoms in said polymer chain.

In a preferred embodiment, PN-Li does not comprise amine groups at all, which means that the H/N atomic

ratio is equal to 4 (i.e. 4 H per N, said 4H corresponding to the four hydrogen atoms in each $C_6H_4$ ring).

It is noted that the possible presence of amine groups in the lithium-doped Pernigraniline-based material of the present invention is due to the possible presence of a small amount of Polyaniline (P) which is the starting reactant used to prepare the desired lithium-doped Pernigraniline-based material of the present invention.

The anion $A^-$ can be selected from $PF_6^-$, $ClO_4^-$, $BF_4^-$, $NO_3^-$, $N(SO_2CF_3)^-$, $AsF_6^-$, $CF_3SO_3^-$, $(CF_3SO_2)_3C^-$, $B(C_2O_4)_2^-$, $BF_2(C_2O_4)^-$, $N(C_4F_9SO_2)(CF_3SO_2)^-$, and mixtures thereof.

A second object of the present invention is a method for the preparation of a lithium-doped Pernigraniline-based material (PN-Li) as defined in the first object of the present invention or of a composition (C') comprising said PN-Li, wherein it comprises at least the following steps:

1) putting into contact Polyaniline (P) or a composition (C) comprising at least Polyaniline (P), with a deprotonation solution to obtain a reaction mixture, said deprotonation solution comprising:

- at least one aprotic solvent,
- at least one lithium salt which is soluble in said aprotic solvent,
- at least one lithiated organic compound ($Li\text{-}OC_1$) or precursors ($PR_1$, $PR_2$) of said lithiated organic compound $Li\text{-}OC_1$, said $Li\text{-}OC_1$ or one of the precursors ($PR_1$ or $PR_2$) being soluble in said aprotic solvent, and said $Li\text{-}OC_1$ being a strong Bronsted base able to deprotonate the amine groups present in Polyaniline (P),

2) leaving the reaction mixture with no mixing or with a moderate mixing,

3) recovering lithium-doped Pernigraniline-based material (PN-Li) or a composition (C') comprising at least one lithium-doped Pernigraniline-based material (PN-Li).

Thanks to this specific deprotonation solution, the complete removal of the hydrogen atoms bonded to nitrogen atoms in Polyaniline is achieved.

Within the meaning of the present invention, the term "strong Bronsted base" is understood to mean "any chemical species able to accept one or more protons $H^+$, preferably having a pKa value above 16".

Polyaniline (P) can be in the emeraldine base state (EB), in the emeraldine salt state (ES) or in the leucoemeraldine state (LE). EB is preferred.

Polyaniline (P) has an average molecular weight ranging from about 362 to 40,000,000 g/mol, and preferably from about 9000 to 900,000 g/mol.

Polyaniline (P) can comprise a catalytic amount of Polyaniline oligomers. These Polyaniline oligomers are soluble in the deprotonation solution and the presence of this catalytic amount of soluble Polyaniline oligomers helps deprotonating Polyaniline (P).

Within the meaning of the present invention, the term "catalytic amount" is understood to mean a proportion of Polyaniline oligomers less than 10% in weight related to the total amount of Polyaniline (P).

Within the meaning of the present invention, the term "Polyaniline oligomers" is understood to mean Polyaniline having an average molecular weight ranging from about 360 to 3600, and preferably from about 360 to 1800.

In a preferred embodiment, the aprotic solvent is a polar aprotic solvent so as to accelerate steps 2) and 3).

The aprotic solvent can be selected from cyclic and linear carbonates such as ethylene carbonate, propylene carbonate, butylene carbonate, dimethyl carbonate, diethyl carbonate, methyl propyl carbonate, dipropyl carbonate, ethyl methyl carbonate, vinylene carbonate, cyclic and linear ethers such as 1,3-dimethoxyethane, 1,3-diethoxyethane, 1,3-dioxolane, tetrahydrofuran, and mixtures thereof.

Propylene carbonate or a mixture of dimethyl carbonate and ethylene carbonate are preferred.

The lithium salt can be selected from $LiPF_6$, $LiClO_4$, $LiBF_4$, $LiNO_3$, $LiAsF_6$, $LiB(C_2O_4)_2$, $LiBF_2(C_2O_4)$, lithium salts having a perfluoroalkanesulphonate anion such as $LiN(SO_2CF_3)$, $LiCF_3SO_3$, $Li(CF_3SO_2)_3C$, $LiN(C_4F_9SO_2)(CF_3SO_2)$, and mixtures thereof.

$LiPF_6$ is preferred.

The deprotonation solution can further comprise an organic compound $OC_2$ which is soluble in said aprotic solvent and which comprises an alkene functional group, preferably a terminal vinyl group.

As an example of organic compound $OC_2$, vinylene carbonate, camphene, pinene, limonene, styrene, butadiene or isoprene can be mentioned.

As an example of organic compound $OC_2$ comprising a terminal vinyl group, styrene, butadiene or isoprene can be mentioned.

This organic compound $OC_2$ acts as a terminal acceptor (i.e. scavenger) of all the hydrogen atoms from Polyaniline and is consumed during the reaction since its alkene functional group is converted into an alkane functional group.

The lithiated organic compound Li-$OC_1$ is a Bronsted base in such a way that it does not act as a nucleophile reacting with Polyaniline.

The lithiated organic compound Li-$OC_1$ can be selected from lithium amides, lithium enolates, lithium ester enolates, lithium acetylides, organolithium compounds, and mixtures thereof.

The precursor $PR_1$ of the lithiated organic compound Li-$OC_1$ can be metallic lithium (Li) and the precursor $PR_2$ of the lithiated organic compound $OC_1$ can be any one of the following conjugated acids of $OC_1$: an amine, a ketone, an ester, an alkyne or an alkyl halide.

The amine can be selected from diisopropyl amine, diethylamine, pyrrole, indole, 2,2,6,6-Tetramethylpiperidine, Bis(trimethylsilyl)amine, dicyclohexyl amine, N,N'-Diphenyl-p-phenylenediamine, piperazine, diphenylamine, carbazole, morpholine, piperidine, pyrrolidine, imidazole and mixtures thereof.

The deprotonation solution must comprise a sufficient amount of lithiated organic compound Li-$OC_1$ or precursor $PR_1$ (Li) to deprotonate all the amine groups present in Polyaniline (P).

Step 1) can be carried out at a temperature ranging from about -20 °C to 180 °C.

In step 1), the mass concentration of Polyaniline (P) in the deprotonation solution ranges from about 0.01 g/l to about 100 g/l, preferably from 0.1 g/l to 10 g/l.

The deprotonation solution can comprise from about 0.1 equivalent to about 50 equivalent of lithium salt with respect to Polyaniline (P).

The deprotonation solution can comprise from about 1 equivalent to about 5 equivalent of $OC_2$ with respect to Polyaniline (P).

The deprotonation solution can comprise from about 1 equivalent to about 5 equivalent of Li-$OC_1$ with respect to Polyaniline (P).

The deprotonation solution can comprise from about 1 equivalent to about 50 equivalent of the metallic lithium with respect to Polyaniline (P).

The deprotonation solution can comprise from about 0.01 equivalent to about 5 equivalent of the conjugated acid of $OC_1$ with respect to Polyaniline (P).

In the case precursors ($PR_1$, $PR_2$) of Li-$OC_1$ are used, $OC_1$ which is generated *in situ* is not consumed during step 2) and therefore, the conjugated acid of $OC_1$ does not need to be in stoichiometric amount with respect to P since a "proton shuttle" mediated by $OC_1$ occurs between P and Li.

The presence of water in said method has to be avoided so as to prevent from the reprotonation of PN-Li.

In step 1), Polyaniline (P) or the composition (C) comprising at least Polyaniline (P) can be in the form of a powder, a film, fibers, nanofibers, a monolith, a coating, etc...

Thus, the obtained PN-Li (respectively the composition (C') comprising at least PN-Li) is produced in the same form as the form used for the starting material Polyaniline (respectively the composition C comprising Polyaniline).

Step 1) can be performed according to the following sub-steps:

1-1) preparing the deprotonation solution, preferably by dissolving the lithium salt in the aprotic solvent, and then adding the lithiated organic compound Li-$OC_1$ or the precursors ($PR_1$, $PR_2$) of said lithiated organic compound Li-$OC_1$, and the organic compound $OC_2$ if present,

1-2) introducing the Polyaniline (P) or the material comprising Polyaniline (P) in the deprotonation solution of step 1-1).

The duration of step 2) can vary from about 2 hours to about 48 hours.

In the case of using metallic lithium as $PR_1$ in step 2), the reaction mixture is preferably not stirred, so as to avoid the direct contact of the metallic lithium with Polyaniline (P). Indeed, metallic lithium may be floating freely and can cause the direct reduction of polyaniline (P) instead of its deprotonation, inducing a decrease of its deprotonation rate.

In the invention, "a moderate mixing or stirring" means a mixing or a stirring with a speed ranging from about 20 to about 120 revolutions per minute.

It is noted that the time required to complete the reaction depends on the morphology and the amount of the starting Polyaniline.

Step 2) can be carried out at a temperature ranging from about -20 °C to 120 °C.

The recovering step 3) (i.e. purification and/or washing step) can be performed by filtration so as to separate the final product PN-Li as a solid from the solution.

The solid after filtration then can be washed several times with an aprotic solvent, preferably with the same aprotic solvent employed in step 1), and then can be dried to remove traces of solvent.

The process of the present invention allows at the same time the deprotonation and the doping with lithium of Polyaniline.

The final product PN-Li of the present invention is stable indefinitely towards hydrolysis in ambient conditions contrary to the other Pernigraniline-based materials described in the prior art.

A third object of the present invention is a positive electrode material comprising:

- at least one polymeric binder,
- optionally a material conferring electronic conduction other than PN-Li,
- optionally an active material other than PN-Li, and

wherein it further comprises a lithium-doped Pernigraniline material PN-Li as defined in the first object of the present invention or as prepared according to the method as defined in the second object of the present invention.

The polymeric binder can be selected from polytetrafluoroethylene (PTFE), polyvinylidenedifluoride (PVdF), polyethylene oxide (PEO), poly(hexafluoropropylene) (PHFP), polypropylene (PP), polyethylene (PE), poly(methyl acrylate) (PMMA) and copolymers and/or mixtures thereof. PTFE is preferred.

The positive electrode material can comprise from about 1 weight% to about 15 weight%, preferably from about 2 weight% to about 10 weight%, and more preferably from about 4 weight% to about 7 weight% of a polymeric binder with respect to the total weight of the positive electrode.

The positive electrode material of the present invention can have a loading of active material and/or PN-Li of about 1 to 50 mg/cm$^2$.

The material conferring electronic conduction can be a carbon-based material.

The material conferring electronic conduction is preferably selected from carbon blacks such as carbon superP®, acetylene blacks, natural or synthetic graphites, carbon aerogels and foams, carbon fibers such as vapor grown carbon fibers (VGCF®), carbon nanotubes, reduced graphite oxide, reduced graphene oxide and mixtures thereof. Vapor grown carbon fibers are preferred.

The material conferring electronic conduction can have a specific surface area ranging from about 10 m$^2$/g to about 3000 m$^2$/g, and preferably from about 400 m$^2$/g to about 3000 m$^2$/g.

When the material conferring electronic conduction has a high specific surface area (i.e. ranging from about 400 m$^2$/g to about 3000 m$^2$/g), it can be selected from activated carbon powders, activated carbon fabrics, carbon nanotubes, carbon nanofibers, reduced graphene oxides, pyrolized graphite oxides, carbon aerogels and mixtures thereof.

In a first embodiment, the positive electrode material does not comprise any other active material than PN-Li.

In this first embodiment, the positive electrode material can comprise at least about 35 weight%, at least about 60 weight%, and more preferably at least about 80 weight% of PN-Li with respect to the total weight of the positive electrode.

The positive electrode material can comprise at most about 98 weight% of PN-Li with respect to the total weight of the positive electrode.

Thus, in this first embodiment, the lithium-doped Pernigraniline-based material PN-Li of the present invention plays the role of an active material in the positive electrode material of the present invention.

Thanks to this positive electrode material containing PN-Li as an active material, it is possible to reach high values of specific capacity and energy density in lithium-ion batteries.

In a first variant of this first embodiment, the positive electrode material is a lithium battery-type positive electrode material comprising with respect to the total weight of the positive electrode material:

- from about 60 weight% to about 98 weight%, and preferably from about 80 weight% to about 98 weight% of PN-Li,
- from about 1 weight% to about 15 weight%, and preferably from about 2 weight% to about 10 weight% of a material conferring electronic conduction other than PN-Li, and
- from about 1 weight% to about 15 weight%, and preferably from about 2 weight% to about 10 weight% of a polymeric binder.

This battery-type positive electrode material is specifically suitable for use in a battery.

In a second variant of this first embodiment, the positive electrode material is a supercapacitor-type positive electrode material comprising with respect to the total weight of the positive electrode material:

- from about 35 weight% to about 60 weight%, and preferably from about 40 weight% to about 50 weight% of PN-Li,
- from about 15 weight% to about 60 weight%, and preferably from about 40 weight% to about 50 weight% of a material conferring electronic conduction other than PN-Li having a high specific surface area ranging from about

400 $m^2/g$ to about 3000 $m^2/g$.

- from about 1 weight% to about 15 weight%, and preferably from about 2 weight% to about 10 weight% of a polymeric binder.

The supercapacitor-type positive electrode material can further comprise from about 1 weight% to about 15 weight%, and preferably from about 2 weight% to about 10 weight% of a material conferring electronic conduction other than PN-Li different from a material conferring electronic conduction having a high specific surface area ranging from about 400 $m^2/g$ to about 3000 $m^2/g$.

This supercapacitor-type positive electrode material is specifically suitable for use in a supercapacitor.

This supercapacitor-type positive electrode material can be used as an electrode material for the positive electrode or for the negative electrode of a supercapacitor.

In a second embodiment, the positive electrode material is a lithium battery-type composite positive electrode material comprising from about 60 weight% to 96 weight% of an active material other than PN-Li with respect to the total weight of the positive electrode material.

Thus, in this second embodiment, the lithium-doped Pernigraniline-based material PN-Li of the present invention plays the role of an additive (e.g. conducting agent) in the positive electrode material of the present invention.

The active material is preferably selected from lithium iron phosphate (LFP), lithium manganese oxide (LMO), lithium nickel-manganese-cobalt oxides (NMC), lithium cobalt oxide (LCO), lithium nickel-cobalt-aluminum oxides (NCA), and mixtures thereof.

The composite positive electrode material can comprise at most 35 weight% of PN-Li with respect to the total weight of the positive electrode with respect to the total weight of the composite positive electrode material.

In this second embodiment, the composite positive electrode material can comprise at least about 1 weight%, and preferably at least about 1.5 weight% of PN-Li with respect to the total weight of the composite positive electrode material.

The composite positive electrode material can comprise from about 1 weight% to about 15 weight%, and preferably from about 2 weight% to about 10 weight% of a material conferring electronic conduction other than PN- Li with respect to the total weight of the composite positive electrode material.

At least one part of PN-Li can be in the form of PN-Li nanofibers, and preferably at least 5 weight% of PN-Li is in the form of PN-Li nanofibers.

When at least one part of PN-Li is in the form of PN-Li nanofibers, the composite positive electrode material preferably does not comprise any other material conferring electronic conduction than PN-Li (i.e. does not comprise carbon-based material such as carbon blacks, acetylene blacks, natural or synthetic graphites, carbon fibers, carbon nanotubes, and mixtures thereof). Thus, PN-Li nanofibers can be a substitute to materials conferring electronic conduction such as carbon-based materials.

Indeed, PN-Li combines electronic conductivity with a good ionic conductivity in the electrolytes usually employed in lithium batteries. This represents an advantage with respect to conducting carbon materials whose ionic permeability is low, especially in the case where the carbon is placed at the interface between the active material and the electrolyte. The use of the material of our invention as a substitute of the carbon coating of active material particles results in an improvement of the performance at high charge and discharge rates. This translates into an enhancement of the energy when the electrode is included in a battery operating at high power.

Thus, the material of the present invention PN-Li serves as a multipurpose additive for electrodes with special utility in the production of thick electrodes, preferably electrodes having a thickness greater than 100 μm, or electrodes with a high surface energy density, preferably electrode having a surface energy density greater than 12 $mWh/cm^2$.

Indeed, increasing the thickness of an electrode translates into an increase of the average distance from the active material to the current collector (path covered by the electrons) and to the bulk electrolyte (path covered by ions). Hence, the limitations to both electrical and ionic transport become a critical issue. An effective electronic transport in the electrode relies in the presence of a good conducting network that can reach all the particles of the active material. PN-Li is such a good conducting network and can thus replace particles of carbonaceous additives which are usually used in the prior art electrodes.

Moreover, the ionic transport is ensured by the porosity in the electrode which once filled with the electrolyte has to form a low tortuosity path for the ions to reach the active material. To avoid limitations in the ionic transport, the porosity in the electrode also has to be large (>30% in volume with respect to the total volume of the electrode material) to facilitate ionic transport. In these conditions however, electronic contacts between the active material and the carbon additives become loose which alters the electronic transport. A conducting polymer such as PN-Li as defined in the present invention is a material whose morphology can be tailored at all the size scales, using a variety of synthesis and processing techniques of such as soft and hard templating, *in situ* polymerization, nanoscale patterning, self-assembly, etc, and therefore which can have the required properties to improve ionic transport.

A fourth object of the present invention is a method for the preparation of a positive electrode material as defined in the third object of the present invention, wherein said method comprises at least the following steps:

A) preparing a composition comprising Polyaniline (P), at least one polymeric binder, optionally a material conferring electronic conduction other PN-Li, and optionally an active material other than PN-Li, and

B) preparing a composition comprising at least one lithium-doped Pernigraniline-based material (PN-Li) from the composition of step A), according to the preparation method as defined in the second object of the present invention.

Thus, the positive electrode material is constituted of the composition prepared in step B).
Polyaniline (P) is as defined in the second object of the present invention.
The polymeric binder, the material conferring electronic conduction other PN-Li, and the active material other than PN-Li are as defined in the third object of the present invention.
When the composition of step A) does not comprise any other active material than PN-Li, step A) can be simply achieved by mixing Polyaniline (P) with at least one polymeric binder and optionally a material conferring electronic conduction other PN-Li.
When the composition of step A) comprises an active material other than PN-Li, step A) can comprise the following sub-steps:

$A_1$) dispersing Polyaniline (P) in a solvent such as NMP, dimethylsulfoxide (DMSO), dimethylformamide (DMF), m-cresol, dimethylacetamide (DMAc), THF or isopropanol.

$A_2$) adding an active material other than PN-Li to the dispersion of step $A_1$),

$A_3$) stirring the preceding mixture of step $A_2$),

$A_4$) adding, preferably dropwise, a solvent such as ethanol (EtOH), methanol (MeOH), water in the preceding mixture of step $A_3$) while stirring,

$A_5$) recovering the active material other than PN-Li coated with Polyaniline (P), and

$A_6$) mixing the active material other than PN-Li coated with Polyaniline (P) obtained in step $A_5$) with at least one polymeric binder and optionally a material conferring electronic conduction.

The recovering step $A_5$) (i.e. purification and/or washing step) can be performed by filtration so as to separate the active material other than PN-Li coated with Polyaniline (P) as a solid from the solution.
The solid after filtration can then be washed several times with a solvent such as EtOH and dried.
A fifth object of the present invention is a lithium battery comprising:

- a positive electrode material,
- a negative electrode material, preferably selected from lithium metal, a lithium alloy, an intercalated lithium compound, carbon graphite, silicon, silicon carbide, and lithium titanate.
- a separator which acts as electrical insulator and allows the transport of ions, and
- a non-aqueous electrolyte comprising at least one lithium salt and an aprotic solvent, and

wherein the positive electrode material is a battery-type positive electrode material or a battery-type composite positive electrode material as defined in the third object of the present invention or prepared according to the preparation method as defined in the fourth object of the present invention.
The lithium salt can be selected from $LiPF_6$, $LiClO_4$, $LiBF_4$, $LiNO_3$, $LiN(SO_2CF_3)$, $LiAsF_6$, $LiCF_3SO_3$, $Li(CF_3SO_2)_3C$, $LiB(C_2O_4)_2$, $LiBF_2(C_2O_4)$, $LiN(C_4F_9SO_2)(CF_3SO_2)$, and mixtures thereof.
The aprotic solvent can be selected from ethylene carbonate, propylene carbonate, butylene carbonate, dimethyl carbonate, diethyl carbonate, methyl propyl carbonate, dipropyl carbonate, ethyl methyl carbonate, vinylene carbonate, 1,3-dimethoxyethane, 1,3-diethoxyethane, 1,3-dioxolane, tetrahydrofurane, and mixtures thereof.
The non-aqueous electrolyte is preferably a 1M $LiPF_6$ in a mixture of EC and DMC in a 1:1 volume proportion.
The present invention allows the repeated cycling of PN-Li without any degradation of the material, with excellent

capacity retention improving the stability of the material with respect to other previously reported "lithium doped" Polyaniline materials.

A sixth object of the present invention is a supercapacitor comprising:

- a positive electrode material,
- a negative electrode material having a high specific surface area (i.e. ranging from about 400 $m^2/g$ to about 3000 $m^2/g$), preferably selected from activated carbon powders, activated carbon fabrics, carbon nanotubes, carbon nanofibers, reduced graphene oxides, pyrolized graphite oxides, carbon aerogels and mixtures thereof,
- a separator which acts as electrical insulator and allows the transport of ions, and
- a non-aqueous electrolyte comprising at least one lithium salt and an aprotic solvent, and

wherein the positive electrode material is a supercapacitor-type positive electrode material as defined in the third object of the present invention or prepared according to the preparation method as defined in the fourth object of the present invention.

It is noted that the materials (positive electrode material and negative electrode material) used respectively for the positive electrode and the negative electrode of said supercapacitor can be inverted.

The lithium salt can be selected from $LiPF_6$, $LiClO_4$, $LiBF_4$, $LiNO_3$, $LiN(SO_2CF_3)$, $LiAsF_6$, $LiCF_3SO_3$, $Li(CF_3SO_2)_3C$, $LiB(C_2O_4)_2$, $LiBF_2(C_2O_4)$, $LiN(C_4F_9SO_2)(CF_3SO_2)$, and mixtures thereof.

The aprotic solvent can be selected from ethylene carbonate, propylene carbonate, butylene carbonate, dimethyl carbonate, diethyl carbonate, methyl propyl carbonate, dipropyl carbonate, ethyl methyl carbonate, vinylene carbonate, 1,3-dimethoxyethane, 1,3-diethoxyethane, 1,3-dioxolane, tetrahydrofuran, gamma-butyrolactone, acetonitrile, dimethyl formaldehyde and mixtures thereof..

The non-aqueous electrolyte is preferably a 1M $LiPF_6$ in a mixture of EC and DMC in a 1:1 volume proportion.

A seventh object of the present invention is a free-standing membrane comprising with respect to the total weight of the membrane:

- from about 2 % to 15 weight% of a polymeric binder, and
- wherein it further comprises from about 85 weight% to 98 weight% of PN-Li as defined in the first object of the present invention or as prepared according to the method as defined in the second object of the present invention.

The membrane is preferably in the form of a film.

In a preferred embodiment, the membrane has a thickness ranging from about 0.1 to 10 $\mu$m.

The polymeric binder can be selected from poly(vinylidenedifluoride) (PVdF), polyethylene oxide (PEO), poly(vinyl alcohol) (PVA), polycarbonates, polyesters, polyamides, polyimides, polyurethanes, and copolymers or mixtures thereof. PVdF is preferred.

An eighth object of the present invention is a method for the preparation of a membrane as defined in the seventh object of the present invention, wherein said method comprises at least the following steps:

i) preparing a composition comprising Polyaniline (P) and at least one polymeric binder in the form of a film,

ii) preparing a composition comprising at least one lithium-doped Pernigraniline-based material (PN-Li) from the composition of step i), according to the preparation method as defined in the second object of the present invention.

Polyaniline (P) is as defined in the second object of the present invention.

Step i) can comprise the following sub-steps:

$i_0$) mixing Polyaniline (P) and at least one polymeric binder in a solvent such as *N*-methylpyrrolidinone (NMP), dimethylsulfoxide (DMSO), dimethylacetamide (DMAc), dimethylformamide (DMF), or m-cresol.

$i_1$) depositing the mixture of step $i_0$) on a support,

$i_2$) drying to obtain a composition comprising at least Polyaniline (P) in the form of a film on the support,

$i_3$) peeling off the film from the support.

The support can be selected from flat glass surfaces, flat metallic surfaces, flat ceramic surfaces or flat plastic surfaces.
The support can have a surface area of between about 4 and 200 $cm^2$.
The drying step can be performed at a temperature ranging from about 30 °C to 80 °C.
By this method, a flexible resistant electrically conducting thin free-standing membrane is obtained.
A ninth object of the present invention is a lithium-doped Pernigraniline-based material (PN'-Li) comprising:

- at least one polymer chain formed by the succession of $C_6H_4$ rings and nitrogen atoms, each nitrogen atom being linked in para position relative to each $C_6H_4$ ring;
- n repeating units;
- a total amount X of lithium cations ($Li^+$);
- an average amount x of lithium cations ($Li^+$) per repeating unit, with x = X/n;
- a total amount Y of anions ($A^{m-}$);
- an average amount y of anions ($A^{m-}$) per repeating unit, with y = mY/n;
- a charge q of each repeating unit,
- a total charge Q of the polymer chain, with $Q=\sum^{n} q_i$ , and Q = mY-X since Q is compensated by the charges of $Li^+$ and $A^{m-}$;
- Q/n represents the formal oxidation state and Q/n = y-x; and

wherein said PN'-Li responding to the following formula (II):

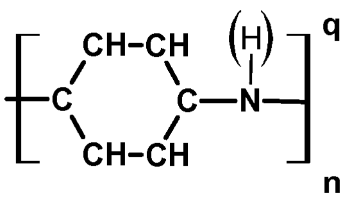 X $Li^+$ Y $A^{m-}$ (II)

in which:

* 4 ≤ n ≤ 500,000, and preferably 100 ≤ n ≤ 10,000,

* q is equal to -1, 0 or +1,

* the atomic ratio hydrogen/nitrogen (H/N) is such that 4 ≤ H/N <4.5, and preferably such that 4 ≤ H/N <4.4,

* 0 ≤ Q/n ≤ 1,

* 0.1 < x < 0.5,

* 0.5 < y ≤ 1.

In PN'-Li, the total charge Q of the polymer chain which depends on its oxidation state is neutral or positive, whereas PN-Li displays a total charge Q which is negative.
In a preferred embodiment, lithium cations are coordinated to the nitrogen atoms in said polymer chain.
In a preferred embodiment, PN-Li does not comprise amine groups at all, which means that the H/N atomic ratio is equal to 4 (i.e. 4 H per N, said 4H corresponding to the four hydrogen atoms in each $C_6H_4$ ring).
The anion $A^-$ is as defined in the first object of the present invention.

A tenth object of the present invention is a method for the preparation of a lithium-doped Pernigraniline-based material (PN'-Li) as defined in the ninth object of the present invention, wherein it comprises at least a step of submitting to a charge a battery or a supercapacitor as defined in the fifth or the sixth object of the present invention.

During the process, PN-Li, which is the starting material, can be oxidized in the presence of the non-aqueous electrolyte of the battery or the supercapacitor when submitted to a charge. Thus, the formal oxidation state Q/n as well as the proportions of lithium cations and anions change, whereas the atomic ratio H/N remains constant.

The following scheme (2) can represent the reversible exchange, at potentials greater than 3.0V vs. Li, between three different oxidation states with respectively negative, neutral and positive charges. The two redox transitions between the three mentioned oxidation states permit the exchange of 1 electron per aniline repeating unit in the polymer chain. PN'-Li material (II-a) displays a formal oxidation state Q/n of 0 and PN'-Li material (II-b) displays a formal oxidation state Q/n of 0.5.

PN'-Li (II-b)

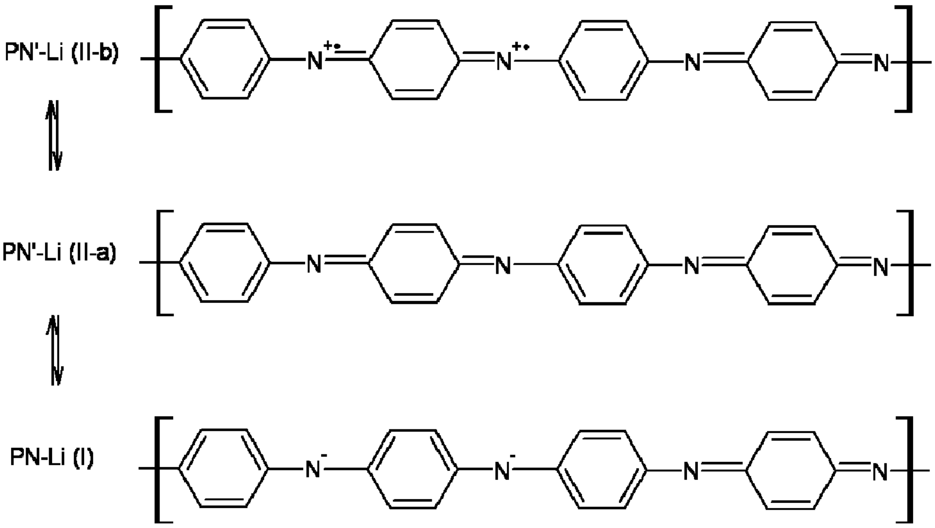

PN'-Li (II-a)

(2)

PN-Li (I)

An eleventh object of the present invention is the use of the lithium-doped Pernigraniline-based material PN-Li as defined in the first object of the invention or prepared according to the method as defined in the second object of the invention, as an active material in electrodes, as a binder, or as a conducting agent, in batteries, supercapacitors, electronic/optoelectronic devices like solar cells, photoconductors, light-emitting or electrochromic devices, field effect transistors, electromagnetic radiation absorbers, gas sensors, separation membranes, antistatic coatings, conducting molecular wires and anticorrosion coatings.

The present invention is illustrated in more details in the examples below, but it is not limited to said examples.

**EXAMPLES**

The starting materials used in the examples which follow, are listed below:

- Lithium hexafluorophosphate ($LiPF_6$): Purolyte®, Novolyte, ≥99.99% purity;
- Dimethyl carbonate (DMC): Purolyte®, Novolyte, ≥99% purity;
- Ethylene carbonate (EC): Purolyte®, Novolyte, ≥99% purity;
- *N,N'*-diphenyl-p-phenylenediamine: Alfa Aesar, 97% purity;
- Metallic lithium used for the synthesis: Aldrich, 99.9% purity;
- Lithium metal used as a negative electrode: Aldrich, 99.9% purity;
- Emeraldine base (EB): Aldrich, molecular weight (MW)~50,000;
- Polytetrafluoroethylene (PTFE): Aldrich;

- Vapour grown carbon fibers (VGCF): Showa Denko;
- *N*-methyl-2-pyrrolidinone (NMP): Aldrich, ≥99% purity;
- $LiFePO_4$ (LFP): Umicore;
- Carbon coated $LiFePO_4$ (LFP/C): Umicore, 2.5 wt% of carbon content;
- Ethanol (EtOH): Carlo Erba, 96% EtOH in volume;
- Reduced graphene oxide (rGO): xGnP®, xGsciences;
- Conductive Carbon SuperP®: Timcal;
- Poly(vinylenedifluoride) (PVdF): Aldrich;

These starting materials were used as received from the manufacturers, without additional purification.

EB nanofibers were synthetized according to the method reported in Jiménez et al. [Macromol. Rapid Comm., 2009, 30(6), 418-422].

The charge/discharge and cyclic voltammetry investigations were carried out using a VMP3 Scanning Probe Electrochemistry (SPE) platform commercialized by Bio-Logic Science Instruments, and an EC-Lab software commercialized by Bio-Logic Science Instruments.

Transmission electron microscopy (TEM) was performed by using a H9000NAR 300 kV microscope commercialized by Hitachi.

**EXAMPLE 1**

**Preparation of a lithium-doped Pernigraniline material PN-Li according to the present invention (i.e. first object of the invention) and prepared according to the process of the present invention (i.e. second object of the invention)**

Inside an argon-filled glove box, 2.1 g of $LiPF_6$ were dissolved in 10 ml of propylene carbonate. To the resulting solution, 160 mg of *N,N'*-diphenyl-p-phenylenediamine and 100 μl of styrene were added. Then, a piece of 0.5 g of metallic lithium was introduced in the preceding solution. Then, 250 mg of polyaniline powder in the emeraldine base state (EB) was introduced in the preceding solution. The reaction was left with no agitation for 16 hours. The lithium was then removed from the reaction mixture and said reaction mixture was filtrated. A solid was recovered and washed twice with 20 ml of dimethyl carbonate (DMC) to yield 239 mg of the desired material **PN-Li** (95% yield).

Figure 1 represents a Fourier transform infrared spectroscopy (FTIR) of PN-Li (curve with a plain line), and to provide a comparison of Emeraldine base EB (curve with a dotted line). Figure 1 shows the absorbance as a function of the wavenumber (in $cm^{-1}$). It can be concluded that the PN-Li material maintains the structure of a polyaniline, since the main vibration modes of EB are preserved with variations in frequency and relative intensity.

The FTIR analysis has been performed using the potassium bromide (KBr) Pellet Method with an apparatus Vertex 70 commercialized by Bruker).

Figure 2 represents the conductivity of PN-Li (in S/m) as a function of the frequency (in GHz). The conductivity has been measured on 7 mm diameter pressed pellets of PN-Li material using simultaneously an impedance analyzer (Agilent 4294 from 40 to $1.1 \cdot 10^7$ Hz) and a network analyzer (HP 8510 from $4.5 \cdot 10^7$ to $10^9$ Hz).

**EXAMPLE 2**

**Preparation of a lithium battery (fifth object of the invention) comprising an electrode material E1-PN-Li according to the present invention (i.e. third object of the invention) prepared according to the process of the present invention (i.e. fourth object of the invention)**

Inside an argon-filled glove box, 2.1 g of $LiPF_6$ were dissolved in 10 ml of a dimethyl carbonate and ethylene carbonate mixture in a 1:1 volume proportion. To the resulting solution, 160 mg of *N,N'*-diphenyl-p-phenylenediamine and 100 μl of styrene were added. Then, a piece of 0.5 g of metallic lithium was introduced in the preceding solution. Then, 250 mg of a mixture of EB, polytetrafluoroethylene (PTFE) and vapour grown carbon fibers (VGCF) in 90:5:5 weight proportions was embedded in a stainless steel wire mesh current collector and the resulting embedded stainless

steel wire was introduced in the preceding solution. The reaction was left undisturbed for 16 hours. The lithium was then removed from the reaction mixture and said reaction mixture was filtrated. A solid was recovered and washed twice with 20 ml of DMC to yield the desired positive electrode material **E1-PN-Li** embedded in the stainless steel wire mesh current collector (**E1-PN-Li**/current collector). The positive electrode material **E1-PN-Li** produced had a loading of 10 mg of PN-Li/$cm^2$ approximately and the thickness of the whole (**E1-PN-Li**/current collector) was about 280 $\mu$m.

A lithium battery (Swagelok® type cell) comprising:

- the obtained positive electrode material **E1-PN-Li** embedded in the stainless steel wire mesh current collector (5 mg of **E1-PN-Li** material),
- lithium metal as a negative electrode material deposited onto a copper current collector; the thickness of the lithium metal was about 400 $\mu$m,
- a solution of 1M $LiPF_6$ in a mixture of EC and DMC in a 1:1 volume proportion as an electrolyte, and
- a Whatman® glass fiber separator provided by GE Healthcare
was assembled inside a glove box commercialized by Jacomex.

Figure 3 represents the electrochemical characterization of the **E1-PN-Li** electrode material by cyclic voltammetry. Figure 3 shows the current density (in microAmpere per milligram, $\mu$A/mg) as a function of the potential (in Volts, V) versus the couple $Li^+/Li^0$ (i.e. vs $Li^+/Li^0$ potential). In figure 3, the lithium battery was subjected to a cyclic voltammetry test between 4.3 V and 2.5 V with negative electrode as reference potential, at a scan speed of 0.1 mV/s.

Figure 4 represents the specific capacity obtained during repeated cycling of the battery between 2.5 and 4.3 V at a 250 $\mu$A current for charge and discharge. Figure 4 shows the specific capacity (in mAh/$g_{PN-Li}$) as a function of the cycle number.

Figure 5 represents the specific capacity of the **E1-PN-Li** electrode material delivered in a sequential discharge test. The electrode is initially charged to 4.3 V and is submitted to successive discharges to 2.5 V at decreasing current values from 15.03 mA to 23.5 $\mu$A (corresponding to discharge rates decreasing from 20 C to 1/32 C). Figure 5 shows on the left the potential vs $Li^+/Li^0$ (in volts, V) as a function of time and on the right the specific capacity (in mAh/$g_{PN-Li}$) as a function of time. Values greater than 180 mAh/g at a 1 C rate and of 210 mAh/g at lower rates were obtained.

Figure 6 represents the Ragone plot (in double logarithmic scale) of the **E1-PN-Li** electrode material power density (in W/$kg_{electrode\ material}$) as a function of the electrode material energy density (in Wh/$kg_{electrode}$ material) during the discharge test described above. This **E1-PN-Li** electrode material is able to deliver energy density values of 460 Wh/kg.

To provide a comparative example, an electrode material **(E1-EB)** was prepared by mixing EB with polytetrafluoroethylene (PTFE) and vapour grown carbon fibers (VGCF) in 90:5:5 weight proportions and by embedding the resulting mixture in a stainless steel wire mesh current collector. This positive electrode material **E1-EB** is not part of the present invention.

Then, a lithium battery (Swagelok® type cell) comprising:

- the obtained positive electrode material **E1-EB** embedded in the stainless steel wire mesh current collector (3 mg of **E1-EB** material); the thickness of the whole (**E1-EB**/current collector) was about 280 $\mu$m,
- lithium metal as a negative electrode material deposited onto a copper current collector; the thickness of the lithium metal was about 400 $\mu$m,
- a solution of 1M $LiPF_6$ in a mixture of EC and DMC in a 1:1 volume proportion as an electrolyte, and
- a Whatman® glass fiber separator provided by GE Healthcare
was assembled inside a glove box commercialized by Jacomex.

Figure 7 represents the electrochemical characterization of the **E1-EB** electrode material by cyclic voltammetry. Figure 7 shows the current density (in $\mu$A/mg) as a function of the potential (in Volts, V) versus the couple $Li^+/Li^0$ (i.e. vs $Li^+/Li^0$ potential). In figure 7, the lithium battery was subjected to a cyclic voltammetry test between 4.3 V and 2.5 V by measuring the potential against the negative electrode, at a scan speed of 0.5 mV/s. Figure 7 shows that there is only one redox transition in EB when it is cycled between 2.5 V and 4.3 V, whereas in PN-Li there are two (cf. figure 3).

**EXAMPLE 3**

**Preparation of a lithium battery (i.e. fifth object of the invention) comprising a composite electrode material CE1-PN-Li according to the present invention (i.e. third object of the invention) prepared according to the process of the present invention (i.e. fourth object of the invention)**

5 mg of EB were dispersed in 5 ml of *N*-methyl-2-pyrrolidinone. Then, 195 mg of $LiFePO_4$ were added to the dispersion and the resulting mixture was stirred for 2 hours. Then, 25 ml of ethanol were added dropwise to the resulting mixture while stirring. The obtained mixture was filtered. A solid was recovered, washed with ethanol, and dried to yield $LiFePO_4$ particles coated with EB (also called LFP/EB material).

Figure 8 represents a TEM image of the obtained LFP/EB material. Figure 8 shows the thin coating of EB covering the $LiFePO_4$ particles.

Inside an argon-filled glove box, 1.5 g of $LiPF_6$ were dissolved in 10 ml of a 1:1 mixture in volume of dimethyl carbonate and ethylene carbonate. To the resulting solution, 1 mg of *N,N'*-diphenyl-p-phenylenediamine and 5 $\mu$l of styrene were added. Then, a piece of 0.2 g of metallic lithium was introduced in the preceding solution. Then, 5 mg of a mixture of LFP/EB material, PTFE, and VGCF in 90:5:5 weight proportions was embedded in a stainless steel wire mesh current collector and the resulting embedded stainless steel wire was introduced in the preceding solution. The reaction was left undisturbed for 16 hours. The lithium was then removed from the reaction mixture and said reaction mixture was filtrated. A solid was recovered and washed twice with 20 ml of DMC to yield the desired positive composite electrode material **CE1-PN-Li.**

To provide a comparative example, a composite electrode material **(CE1-carbon)** was prepared by mixing carbon coated $LiFePO_4$ (LFP/C), PTFE, and VGCF in 90:5:5 weight proportions and by embedding the resulting mixture in a stainless steel wire mesh current collector. This composite positive electrode material is not part of the present invention.

All the positive electrodes materials produced had a loading of active material (LFP) of 10 $mg/cm^2$ approximately.

Two lithium batteries (Swagelok® type cell) comprising:

- the obtained positive electrode material **CE1-PN-Li** embedded in the stainless steel wire mesh current collector (2 mg of **CE1-PN-Li** material) or the obtained positive electrode material **CE1-carbon** embedded in the stainless steel wire mesh current collector (2 mg of **CE1-carbon**),
- lithium metal as a negative electrode material deposited onto a copper current collector; the thickness of the lithium metal was about 400 $\mu$m,
- a solution of 1M $LiPF_6$ in a mixture of EC and DMC in a 1:1 volume proportion as an electrolyte, and
- a Whatman® glass fiber separator provided by GE Healthcare

were assembled inside a glove box commercialized by Jacomex.

Figure 9 represents the Ragone plot of the electrode power density (in $W/kg_{electrode\ material}$) as a function of the electrode energy density (in $Wh/kg_{electrode}$ material) for each electrode, when each corresponding battery is subjected to charge-discharge tests between 4.2 V and 2.5 V at decreasing current rates from 20 C to 1/32 C (1 C being equivalent to a current density of 170 mAh/g based on LFP). The **CE1-PN-Li composite electrode** material (curve with squares and plain line) displays better performance at high discharge rates than the **CE1-carbon composite electrode** material (curve with circles and dotted line).

**EXAMPLE 4**

**Preparation of a supercapacitor (sixth object of the invention) comprising an electrode material E2-PN-Li according to the present invention (i.e. third object of the invention) prepared according to the process of the present invention (i.e. fourth object of the invention)**

25 mg of EB were dispersed in 10 ml of NMP. 25 mg of reduced graphene oxide (rGO) were added to the dispersion and the resulting mixture was stirred for 2 hours. 25 ml of ethanol were added dropwise to the resulting mixture while stirring. The obtained mixture was filtered. A solid was recovered, was washed with ethanol, and dried to yield reduced graphene oxide coated with EB (also called rGO/EB material).

Inside an argon-filled glove box, 1.5 g of $LiPF_6$ were dissolved in 10 ml of a 1:1 volume mixture of dimethyl carbonate and ethylene carbonate. To the resulting solution, 1 mg of *N,N'*-diphenyl-p-phenylenediamine and 5 $\mu$l of

styrene were added. Then, a piece of 0.2 g of metallic lithium was introduced in the preceding solution. Then, 1.6 mg of a mixture of rGO/EB material, PTFE, and carbon SuperP in 90:5:5 weight proportions was embedded in a stainless steel wire mesh and the resulting embedded stainless steel wire was introduced in the preceding solution. The reaction was left undisturbed for 16 hours. The lithium was then removed from the reaction mixture and said reaction mixture was filtrated. A solid was recovered and washed twice with 20 ml of dimethyl carbonate to yield the desired positive electrode material **E2-PN-Li.**

To provide two comparative examples, an electrode material (**E2- EB**) was prepared by mixing rGO/EB material, PTFE, and carbon SuperP in 90:5:5 weight proportions, and by embedding the resulting mixture in a stainless steel wire mesh current collector; and an electrode material (**E2**) was prepared by mixing rGO, PTFE, and carbon SuperP in 90:5:5 weight proportions, and by embedding the resulting mixture in a stainless steel wire mesh current collector. These two positive electrodes materials are not part of the present invention.

Three lithium batteries (Swagelok® type cell) comprising:

- the obtained positive electrode material **E2-PN-Li** embedded in the stainless steel wire mesh current collector (1.77 mg of **E2-PN-Li** material) or the obtained positive electrode material **E2- EB** embedded in the stainless steel wire mesh current collector (1.8 mg of **E2-EB** material) or the obtained positive electrode material **E2** embedded in the stainless steel wire mesh current collector (1.75 mg of **E2** material),

- lithium metal as a negative electrode material deposited onto a copper current collector; the thickness of the lithium metal was about 400 μm,

- a solution of 1M $LiPF_6$ in a mixture of EC and DMC in a 1:1 volume proportion as an electrolyte, and

- a Whatman® glass fiber separator provided by GE Healthcare
  were assembled inside a glove box commercialized by Jacomex.

All the positive electrodes produced had a loading of material (rGO and PN-Li if it is present) of 10 $mg/cm^2$ approximately.

Figure 10 represents the electrochemical characterization of the **E2-PN-Li** electrode material (curve with plain line), of the **E2-EB** electrode material (curve with dotted line) and of the **E2** electrode material (curve with dashed line) by cyclic voltammetry. Figure 10 shows the electrode material specific capacity (in mAh/g) obtained during repeated cycling of the battery between 2.5 and 4.3 V at a scan speed of 1 mV/s as a function of the cycle number.

**EXAMPLE 5**

**Preparation of a lithium battery (fifth object of the invention) comprising a composite electrode material CE2-PN-Li according to the present invention (i.e. third object of the invention) prepared according to the process of the present invention (i.e. fourth object of the invention)**

Inside an argon-filled glove box, 1.5 g of $LiPF_6$ were dissolved in 10 ml of a 1:1 volume mixture of dimethyl carbonate and ethylene carbonate. To the resulting solution, 1 mg of *N,N'*-diphenyl-p-phenylenediamine and 5 μl of styrene were added. Then, a piece of 0.2 g of metallic lithium was introduced in the preceding solution. Then, 5 mg of a mixture of LFP/EB material prepared in example 3, PTFE, and EB nanofibers in 90:5:5 weight proportions was embedded in a stainless steel wire mesh and the resulting embedded stainless steel wire mesh was introduced in the preceding solution. The reaction was left undisturbed for 16 hours. The lithium was then removed from the reaction mixture and said reaction mixture was filtrated. A solid was recovered and washed twice with 20 ml of DMC to yield the desired positive composite electrode material **CE2-PN-Li** (99% yield).

A lithium battery (Swagelok® type cell) comprising:

- the obtained positive electrode material **CE2-PN-Li** embedded in the stainless steel wire mesh current collector (5.5 mg of **CE2-PN-Li** material, the electrode of the whole (**CE2-PN-Li** /current collector) was about 280 μm,

- lithium metal as a negative electrode material deposited onto a copper current collector; the thickness of the lithium metal was about 400 μm,

- a solution of 1M $LiPF_6$ in a mixture of EC and DMC in a 1:1 volume proportion as an electrolyte, and

- a Whatman® glass fiber separator provided by GE Healthcare

was assembled inside a glove box commercialized by Jacomex.

The positive electrode produced had a loading of active material (LFP) of 25 mg/$cm^2$ approximately.

Figure 11 represents the Ragone plot of the electrode power density (in W/$kg_{LFP}$) as a function of the electrode energy density (in Wh/$kg_{LFP}$) for the obtained positive electrode, when the battery is subjected to charge-discharge tests between 4.2 V and 2.5 V at decreasing current rates from 20 C to 1/32 C (1 C being equivalent to a current density of 170 mAh/g based on LFP).

**EXAMPLE 6**

**Preparation of a free-standing membrane film MF-PN-Li according to the present invention (i.e. seventh object of the invention) and prepared according to the process of the present invention (i.e. eighth object of the invention)**

A dispersion of 1 mg of poly(vinylenedifluoride) (PVDF) and 19 mg of EB in 1 ml of NMP was prepared by stirring. The mixture was spread on a flat glass substrate with a surface of around 25 $cm^2$. The deposition was dried for 24 hours at 60°C to obtain a film. The film was peeled off from the glass substrate by immersion in distilled water and it was dried again to remove water.

Inside an argon-filled glove box, 1.5 g of $LiPF_6$ were dissolved in 10 ml of a 1:1 mixture of ethylene carbonate and dimethyl carbonate. To the resulting solution, 2 mg of *N,N'*-diphenyl-p-phenylenediamine and 10 μl of styrene were added. Then, a piece of 0.4 g of metallic lithium was introduced in the preceding solution. Then, the film previously prepared (20 mg) was introduced in the preceding solution. The reaction was left undisturbed for 16 hours. The lithium was then removed from the reaction mixture and said reaction mixture was filtrated. A membrane film of PN-Li material was recovered and washed thrice with 50 ml of DMC to yield the desired flexible, resistant and electrically conducting thin (~1μm) membrane film **MF-PN-Li** (21.5 mg).

**Claims**

1. A lithium-doped Pernigraniline-based material (PN-Li), comprising:

- at least one polymer chain formed by the succession of $C_6H_4$ rings and nitrogen atoms, each nitrogen atom being linked in para position relative to each $C_6H_4$ ring;
- n repeating units;
- a total amount X of lithium cations ($Li^+$);
- an average amount x of lithium cations ($Li^+$) per repeating unit, with x = X/n;
- a total amount Y of anions ($A^{m-}$);
- an average amount y of charge provided by anions ($A^{m-}$) per repeating unit, with y = mY/n;
- a charge q of each repeating unit,
- a total charge Q of the polymer chain, with $Q=\sum^{n} q_i$, and Q = mY-X since Q is compensated by the charges of $Li^+$ and $A^{m-}$;
- Q/n represents the formal oxidation state and Q/n = y-x; and

wherein said PN-Li responds to the following formula (I):

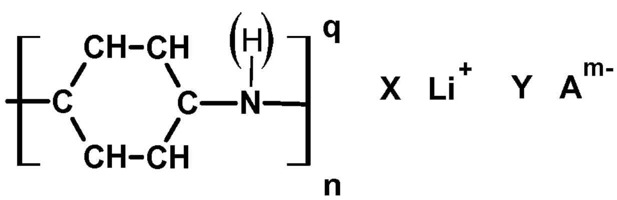

(I)

in which:

* 4 ≤ n ≤ 500,000,

* q is equal to -1, 0 or +1,
* the atomic ratio hydrogen/nitrogen (H/N) is such that $4 \leq H/N < 4.5$,
* $-1 \leq Q/n < 0$,
* $0.5 \leq x \leq 1$,
* $0 \leq y \leq 0.5$.

**2.** A method for the preparation of a lithium-doped Pernigraniline-based material (PN-Li) as defined in claim 1 or a composition (C') comprising PN-Li as defined in claim 1, wherein it comprises at least the following steps:

1) putting into contact Polyaniline (P) or a composition (C) comprising at least Polyaniline (P), with a deprotonation solution to obtain a reaction mixture, said deprotonation solution comprising:

- at least one aprotic solvent,
- at least one lithium salt which is soluble in said aprotic solvent,
- at least one lithiated organic compound ($Li-OC_1$) or precursors ($PR_1$, $PR_2$) of said lithiated organic compound $Li-OC_1$, said $Li-OC_1$ or ($PR_1$, $PR_2$) being soluble in said aprotic solvent, and said $Li-OC_1$ being a strong Bronsted base able to deprotonate the amine groups present in Polyaniline (P),

2) leaving the reaction mixture with no mixing or with a moderate mixing,
3) recovering lithium-doped Pernigraniline-based material (PN-Li) or a composition (C') comprising at least one lithium-doped Pernigraniline-based material (PN-Li).

**3.** The method according to claim 2, wherein the deprotonation solution further comprises an organic compound $OC_2$ which is soluble in said aprotic solvent and which comprises an alkene functional group.

**4.** The method according to claim 2 or 3, wherein the lithiated organic compound $Li-OC_1$ is selected from lithium amides, lithium enolates, lithium ester enolates, lithium acetylides, organolithium compounds, and mixtures thereof.

**5.** The method according anyone of claims 2 to 4, wherein the precursor $PR_1$ of the lithiated organic compound $Li-OC_1$ is metallic lithium (Li) and the precursor $PR_2$ of the lithiated organic compound $OC_1$ is any one of the following conjugated acids of $OC_1$: an amine, a ketone, an ester, an alkyne or an alkyl halide.

**6.** A positive electrode material comprising:

- at least one polymeric binder,
- optionally a material conferring electronic conduction other than PN-Li,
- optionally an active material other than PN-Li, and

wherein it further comprises a lithium-doped Pernigraniline material PN-Li as defined in claim 1 or as prepared according to the method as defined in anyone of claims 2 to 5.

**7.** The positive electrode material according to claim 6, wherein said positive electrode material is a lithium battery-type positive electrode material comprising with respect to the total weight of the positive electrode material:

- from 60 weight% to 98 weight% of PN-Li,
- from 1 weight% to 15 weight% of a material conferring electronic conduction other than PN-Li, and
- from 1 weight% to 15 weight% of a polymeric binder;

and wherein said positive electrode material does not comprise any other active material than PN-Li.

**8.** The positive electrode material according to claim 6, wherein said positive electrode material is a supercapacitor-type positive electrode material comprising with respect to the total weight of the positive electrode material:

- from 35 weight% to 60 weight % of PN-Li,
- from 15 weight% to 60 weight% of a material conferring electronic conduction other than PN-Li having a high specific surface area ranging from 400 $m^2/g$ to 3000 $m^2/g$, and
- from 1 weight% to 15 weight % of a polymeric binder;

and wherein said positive electrode material does not comprise any other active material than PN-Li.

**9.** The positive electrode material according to claim 6, wherein it is a lithium battery-type composite positive electrode material comprising from 60 weight% to 96 weight% of an active material other than PN-Li with respect to the total weight of the positive electrode material.

**10.** A method for the preparation of a positive electrode material as defined in anyone of claims 6 to 9, wherein said method comprises at least the following steps:

A) preparing a composition comprising Polyaniline (P), at least one polymeric binder, optionally a material conferring electronic conduction other PN-Li, and optionally an active material other than PN-Li, and
B) preparing a composition comprising at least one lithium-doped Pernigraniline-based material (PN-Li) from the composition of step A), according to the preparation method as defined in anyone of claims 2 to 5.

**11.** A lithium battery comprising:

- a positive electrode material,
- a negative electrode material,
- a separator which acts as electrical insulator and allows the transport of ions, and
- a non-aqueous electrolyte comprising at least one lithium salt and an aprotic solvent, and

wherein the positive electrode material is a battery-type positive electrode material or a battery-type composite positive electrode material as defined in claim 7 or claim 9 or prepared according to the preparation method as defined in anyone of claims 2 to 5.

**12.** A supercapacitor comprising:

- a positive electrode material,
- a negative electrode material,
- a separator which acts as electrical insulator and allows the transport of ions, and
- a non-aqueous electrolyte comprising at least one lithium salt and an aprotic solvent, and

wherein the positive electrode material is a supercapacitor-type positive electrode material as defined in claim 8 or prepared according to the preparation method as defined in in anyone of claims 2 to 5.

**13.** A free-standing membrane comprising with respect to the total weight of the membrane:

- from 2 weight% to 15 weight% of a polymeric binder, and
- wherein it further comprises from 85 weight% to 98 weight% of PN-Li as defined in claim 1 or as prepared according to the method as defined in anyone of claims 2 to 5.

**14.** A method for the preparation of a membrane as defined in claim 13, wherein said method comprises at least the following steps:

i) preparing a composition comprising Polyaniline (P) and at least one polymeric binder in the form of a film,
ii) preparing a composition comprising at least one lithium-doped Pernigraniline-based material (PN-Li) from the composition of step i), according to the preparation method as defined in anyone of claims 2 to 5.

**15.** A lithium-doped Pernigraniline-based material (PN'-Li) comprising:

- at least one polymer chain formed by the succession of $C_6H_4$ rings and nitrogen atoms, each nitrogen atom being linked in para position relative to each $C_6H_4$ ring;
- n repeating units;
- a total amount X of lithium cations ($Li^+$);
- an average amount x of lithium cations ($Li^+$) per repeating unit, with x = X/n;
- a total amount Y of anions ($A^{m-}$);
- an average amount y of charge provided by anions ($A^{m-}$) per repeating unit, with y = mY/n;
- a charge q of each repeating unit,

- a total charge Q of the polymer chain, with $Q=\sum^{n} q_i$ , and Q = mY-X since Q is compensated by the charges of $Li^+$ and $A^{m-}$;
- Q/n represents the formal oxidation state and Q/n = y-x; and

wherein said PN'-Li responding to the following formula (II):

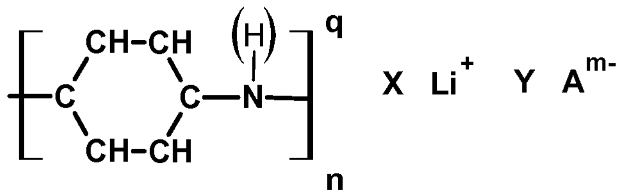

(II)

in which:

* $4 \leq n \leq 500{,}000$,
* q is equal to -1, 0 or +1,
* the atomic ratio hydrogen/nitrogen (H/N) is such that $4 \leq H/N < 4.5$,
* $0 \leq Q/n \leq 1$,
* $0.1 < x < 0.5$,
* $0.5 < y \leq 1$.

**16.** A method for the preparation of a lithium-doped Pernigraniline-based material (PN'-Li) as defined in claim 15, wherein it comprises at least a step of submitting to a charge a battery as defined in claim 11 or a supercapacitor as defined in claim 12.

**17.** Use of the lithium-doped Pernigraniline-based material PN-Li as defined in claim 1 or prepared according to the method as defined in anyone of claims 2 to 5, as an active material in electrodes, as a binder, or as a conducting agent, in batteries, supercapacitors, electronic and/or optoelectronic devices like solar cells, photoconductors, light-emitting or electrochromic devices, field effect transistors, electromagnetic radiation absorbers, gas sensors, separation membranes, antistatic coatings, conducting molecular wires and anticorrosion coatings.

**Patentansprüche**

**1.** Lithium-Dotiert-Material auf Basis von Pernigranilin (PN-Li) aufweisend:

- mindestens eine Polymerkette, die durch die Abfolge von $C_6H_4$-Ringen und Stickstoffatomen gebildet wird, wobei jedes Stickstoffatom in para-Position relativ zu jedem $C_6H_4$-Ring gebunden ist;
- n Wiederholungseinheiten;
- eine Gesamtmenge X von Lithium-Kationen ($Li^+$);
- eine durchschnittliche Menge x von Lithium-Kationen ($Li^+$) pro Wiederholungseinheit, mit x = X/n;
- eine Gesamtmenge Y von Anionen ($A^{m-}$);
- eine durchschnittliche Menge y von Ladung pro Wiederholungseinheit, bereitgestellt durch Anionen ($A^{m-}$) , mit y = mY/n;
- eine Ladung q von jeder Wiederholungseinheit,
- eine Gesamtladung Q der Polymerkette, mit $Q = \sum^{n} q_i$ und Q = mY - X, da Q durch die Ladungen von $Li^+$ und $A^{m-}$ kompensiert wird;
- Q/n stellt die formale Oxidationsstufe dar und Q/n = y - x; und

wobei das besagte PN-Li der folgenden Formel (I) entspricht:

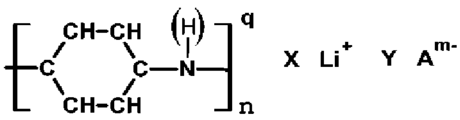

(I)

wobei:

*$4 \leq n \leq 500.000$,
*q entspricht -1, 0 oder +1,
*das atomare Verhältnis Wasserstoff/Stickstoff (H/N) ist so, dass $4 \leq H/N < 4{,}5$,
*$-1 \leq Q/n < 0$,
*$0{,}5 \leq x \leq 1$,
*$0 \leq y \leq 0{,}5$.

**2.** Verfahren zur Herstellung eines Lithium-Dotiert-Materials auf Basis von Pernigranilin (PN-Li) wie in Anspruch 1 definiert oder einer Zusammensetzung (C'), die PN-Li wie in Anspruch 1 definiert aufweist, wobei es mindestens die folgenden Schritte aufweist:

1) In-Kontakt-Bringen von Polyanilin (P) oder einer Zusammensetzung (C), aufweisend mindestens Polyanilin (P), mit einer Deprotonierungslösung, um ein Reaktionsgemisch zu erhalten, wobei die besagte Deprotonierungslösung aufweist:

- mindestens ein aprotisches Lösungsmittel,
- mindestens ein Lithiumsalz, welches in dem besagten aprotischen Lösungsmittel löslich ist,
- mindestens eine lithiierte organische Verbindung (Li-$OC_1$) oder Vorläufer ($PR_1$, $PR_2$) der besagten lithiierten organischen Verbindung Li-$OC_1$, wobei die besagte Li-$OC_1$ oder ($PR_1$, $PR_2$) in dem besagten aprotischen Lösungsmittel löslich ist, und wobei die besagte Li-$OC_1$ eine starke Brönsted-Base ist, welche in der Lage ist, die in Polyanilin (P) vorhandenen Amingruppen zu deprotonieren,

2) Belassen des Reaktionsgemisches ohne Mischen oder mit einem moderaten Mischen,
3) Gewinnung von Lithium-Dotiert-Material auf Basis von Pernigranilin (PN-Li) oder einer Zusammensetzung (C'), die mindestens ein Lithium-Dotiert-Material auf Basis von Pernigranilin (PN-Li) aufweist.

**3.** Verfahren gemäß Anspruch 2, wobei die Deprotonierungslösung ferner eine organische Verbindung $OC_2$ aufweist, welche in dem besagten aprotischen Lösungsmittel löslich ist und welche eine funktionelle Alkengruppe aufweist.

**4.** Verfahren gemäß Anspruch 2 oder 3, wobei die lithiierte organische Verbindung Li-$OC_1$ ist, ausgewählt aus Lithiumamiden, Lithiumenolaten, Lithiumesterenolaten, Lithiumacetyliden, Organolithiumverbindungen und Mischungen dieser.

**5.** Verfahren gemäß irgendeinem der Ansprüche 2 bis 4, wobei der Vorläufer $PR_1$ der lithiierten organischen Verbindung Li-$OC_1$ metallisches Lithium (Li) ist und der Vorläufer $PR_2$ der lithiierten organischen Verbindung $OC_1$ ist irgendeine der folgenden konjugierten Säuren von $OC_1$ : ein Amin, ein Keton, ein Ester, ein Alkin oder ein Alkylhalogenid.

**6.** Positiv-Elektrode-Material aufweisend:

- mindestens ein polymeres Bindemittel,
- optional ein Elektronenleitung ermöglichendes Material außer PN-Li,
- optional ein Aktiv-Material außer PN-Li, und

wobei es ferner ein Lithium-Dotiert-Pernigranilinmaterial PN-Li aufweist, wie in Anspruch 1 definiert, oder wie gemäß dem Verfahren, wie in irgendeinem der Ansprüche 2 bis 5 definiert, hergestellt.

**7.** Positiv-Elektrode-Material gemäß Anspruch 6, wobei das besagte Positiv-Elektrode-Material ein Positiv-Elektrode-Material vom Lithium-Batterie-Typ ist, das bezogen auf das Gesamtgewicht des Positiv-Elektrode-Materials aufweist:

- von 60 Gew.-% bis 98 Gew.-% von PN-Li,
- von 1 Gew.-% bis 15 Gew.-% eines Elektronenleitung ermöglichenden Materials außer PN-Li, und

- von 1 Gew.-% bis 15 Gew.-% eines polymeren Bindemittels;

und wobei das besagte Positiv-Elektrode-Material kein anderes Aktiv-Material als PN-Li aufweist.

**8.** Positiv-Elektrode-Material gemäß Anspruch 6, wobei das besagte Positiv-Elektrode-Material ein Positiv-Elektrode-Material vom Superkondensator-Typ ist, das bezogen auf das Gesamtgewicht des Positiv-Elektrode-Materials aufweist:

- von 35 Gew.-% bis 60 Gew.-% von PN-Li,
- von 15 Gew.-% bis 60 Gew.-% eines Elektronenleitung ermöglichenden Materials außer PN-Li mit einer hohen spezifischen Oberfläche im Bereich von 400 $m^2/g$ bis 3000 $m^2/g$, und
- von 1 Gew.-% bis 15 Gew.-% eines polymeren Bindemittels;

und wobei das besagte Positiv-Elektrode-Material kein anderes Aktiv-Material als PN-Li aufweist.

**9.** Positiv-Elektrode-Material gemäß Anspruch 6, wobei es ein Verbundstoff-Positiv-Elektrode-Material vom Lithium-Batterie-Typ ist, das bezogen auf das Gesamtgewicht des Positiv-Elektrode-Materials 60 Gew.-% bis 96 Gew.-% eines Aktiv-Materials außer PN-Li aufweist.

**10.** Verfahren zur Herstellung eines Positiv-Elektrode-Materials, wie in irgendeinem der Ansprüche 6 bis 9 definiert, wobei das besagte Verfahren mindestens die folgenden Schritte aufweist:

A) Herstellen einer Zusammensetzung aufweisend Polyanilin (P), mindestens ein polymeres Bindemittel, optional ein Elektronenleitung ermöglichendes Material außer PN-Li, und optional ein Aktiv-Material außer PN-Li, und
B) Herstellen einer Zusammensetzung aufweisend mindestens ein Lithium-Dotiert-Material auf Basis von Pernigranilin (PN-Li) aus der Zusammensetzung von Schritt A), nach dem Herstellungsverfahren wie in irgendeinem der Ansprüche 2 bis 5 definiert.

**11.** Lithium-Batterie, aufweisend:

- ein Positiv-Elektrode-Material,
- ein Negativ-Elektrode-Material,
- einen Separator, welcher als elektrischer Isolator wirkt und den Transport von Ionen erlaubt, und
- ein nicht-wässriger Elektrolyt aufweisend mindestens ein Lithiumsalz und ein aprotisches Lösungsmittel, und

wobei das Positiv-Elektrode-Material ein Positiv-Elektrode-Material vom Batterie-Typ ist oder ein Verbundstoff-Positiv-Elektrode-Material vom Batterie-Typ, wie in Anspruch 7 oder in Anspruch 9 definiert, oder gemäß dem Herstellungsverfahren, wie in irgendeinem der Ansprüche 2 bis 5 definiert, hergestellt.

**12.** Superkondensator, aufweisend:

- ein Positiv-Elektrode-Material,
- ein Negativ-Elektrode-Material,
- einen Separator, welcher als elektrischer Isolator wirkt und den Transport von Ionen erlaubt, und
- ein nicht-wässriger Elektrolyt aufweisend mindestens ein Lithiumsalz und ein aprotisches Lösungsmittel, und

wobei das Positiv-Elektrode-Material ein Positiv-Elektrode-Material vom Superkondensator-Typ ist, wie in Anspruch 8 definiert, oder gemäß dem Herstellungsverfahren, wie in irgendeinem der Ansprüche 2 bis 5 definiert, hergestellt.

**13.** Freitragende Membran aufweisend, bezogen auf das Gesamtgewicht der Membran:

- von 2 Gew.-% bis 15 Gew.-% eines polymeren Bindemittels, und
- wobei sie ferner von 85 Gew.-% bis 98 Gew.-% von PN-Li aufweist, wie in Anspruch 1 definiert, oder wie gemäß dem Verfahren, wie in irgendeinem der Ansprüche 2 bis 5 definiert, hergestellt.

**14.** Verfahren zur Herstellung einer Membran wie in Anspruch 13 definiert, wobei das Verfahren mindestens die folgenden Schritte aufweist:

i) Herstellen einer Zusammensetzung aufweisend Polyanilin (P) und mindestens ein polymeres Bindemittel in Form eines Films,
ii) Herstellen einer Zusammensetzung, die mindestens ein Lithium-Dotiert-Material auf Basis von Pernigranilin (PN-Li) aufweist, ausgehend von der Zusammensetzung von Schritt i), nach dem Herstellungsverfahren wie in irgendeinem der Ansprüche 2 bis 5 definiert.

**15.** Lithium-Dotiert-Material auf Basis von Pernigranilin (PN'-Li) aufweisend:

- mindestens eine Polymerkette, die durch die Abfolge von $C_6H_4$-Ringen und Stickstoffatomen gebildet wird, wobei jedes Stickstoffatom in para-Position relativ zu jedem $C_6H_4$-Ring gebunden ist;
- n Wiederholungseinheiten;
- eine Gesamtmenge X von Lithium-Kationen ($Li^+$);
- eine durchschnittliche Menge x von Lithium-Kationen ($Li^+$) pro Wiederholungseinheit, mit x = X/n;
- eine Gesamtmenge Y von Anionen ($A^{m-}$);
- eine durchschnittliche Menge y von Ladung pro Wiederholungseinheit, bereitgestellt durch Anionen ($A^{m-}$), mit y = mY/n;
- eine Ladung q von jeder Wiederholungseinheit,
- eine Gesamtladung Q der Polymerkette, mit $Q = \sum^n q_i$ und Q = mY - X, da Q durch die Ladungen von $Li^+$ und $A^{m-}$ kompensiert wird;
- Q/n stellt die formale Oxidationsstufe dar und Q/n = y - x; und

wobei das besagte PN'-Li der folgenden Formel (II) entspricht:

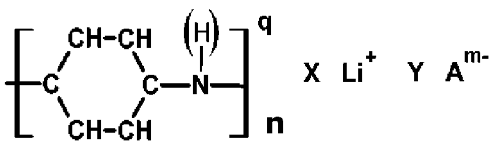

(II)

wobei:

* $4 \leq n \leq 500.000$,
* q entspricht -1, 0 oder +1,
* das atomare Verhältnis Wasserstoff/Stickstoff (H/N) ist so, dass $4 \leq H/N < 4,5$,
* $0 \leq Q/n \leq 1$,
* $0,1 < x < 0,5$,
* $0,5 < y \leq 1$.

**16.** Verfahren zur Herstellung eines Lithium-Dotiert-Materials auf Basis von Pernigranilin (PN'-Li) wie in Anspruch 15 definiert, wobei es mindestens einen Schritt des Unterziehens eines Ladens einer Batterie, wie in Anspruch 11 definiert, oder eines Superkondensators, wie in Anspruch 12 definiert, aufweist.

**17.** Verwendung des Lithium-Dotiert-Materials auf Basis von Pernigranilin (PN-Li) wie in Anspruch 1 definiert oder gemäß dem Verfahren, wie in irgendeinem der Ansprüche 2 bis 5 definiert, hergestellt, als Aktiv-Material in Elektroden, als Bindemittel, oder als leitfähiges Mittel in Batterien, Superkondensatoren, elektronischen und/oder optoelektronischen Vorrichtungen, wie Solarzellen, Fotoleitern, lichtemittierenden oder elektrochromen Vorrichtungen, Feldeffekttransistoren, elektromagnetischen Strahlungsabsorbern, Gassensoren, Trennmembranen, Antistatisch-Beschichtungen, leitenden Molekulardrähten und Antikorrosion-Beschichtungen.

## Revendications

**1.** Matériau à base de pernigraniline dopée au lithium (PN-Li), comprenant :

- au moins une chaîne polymère formée par la succession de cycles $C_6H_4$ et d'atomes d'azote, chaque atome d'azote étant lié en position para par rapport à chaque cycle $C_6H_4$ ;
- n motifs répétitifs ;
- une quantité totale X de cations lithium ($Li^+$) ;

- une quantité moyenne x de cations lithium ($Li^+$) par motif répétitif, avec x = X/n ;
- une quantité totale Y d'anions ($A^{m-}$) ;
- une quantité moyenne y de charge fournie par les anions ($A^{m-}$) par motif répétitif, avec y = mY/n ;
- une charge q de chaque motif répétitif,
- une charge totale Q de la chaîne polymère, avec $Q = \sum^{n} q_i$, et Q = mY-X puisque Q est compensé par les charges de $Li^+$ et $A^{m-}$ ;
- Q/n représente l'état d'oxydation formel et Q/n = y-x ; et

dans lequel ladite PN-Li correspond à la formule (I) suivante :

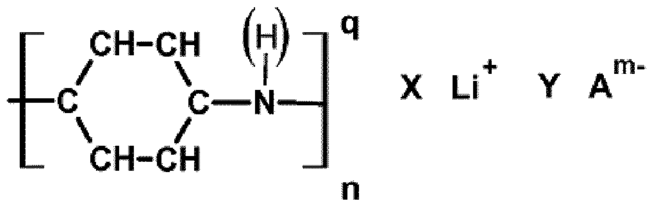

(I)

dans laquelle :

* 4 ≤ n ≤ 500 000,
* q est égal à -1, 0 ou +1,
* le rapport atomique hydrogène/azote (H/N) est tel que 4 ≤ H/N < 4,5,
* -1 ≤ Q/n < 0,
* 0,5 ≤ x ≤ 1,
* 0 ≤ y ≤ 0,5.

**2.** Procédé pour la préparation d'un matériau à base de pernigraniline dopée au lithium (PN-Li) tel que défini dans la revendication 1 ou d'une composition (C') comprenant de la PN-Li comme défini dans la revendication 1, qui comprend au moins les étapes suivantes consistant à :

1) mettre en contact de la polyaniline (P) ou une composition (C) comprenant au moins de la polyaniline (P) avec une solution de déprotonation pour que soit obtenu un mélange réactionnel, ladite solution de déprotonation comprenant :

- au moins un solvant aprotique,
- au moins un sel de lithium qui est soluble dans ledit solvant aprotique,
- au moins un composé organique lithié ($Li-OC_1$) ou des précurseurs ($PR_1$, $PR_2$) dudit composé organique lithié $Li-OC_1$, ledit $Li-OC_1$ ou ($PR_1$, $PR_2$) étant soluble dans ledit solvant aprotique, et ledit $Li-OC_1$ étant une base de Brönsted forte capable de déprotoner les groupes amine présents dans la polyaniline (P),

2) laisser le mélange réactionnel sans mélange ou avec un mélange modéré,
3) récupérer le matériau à base de pernigraniline dopée au lithium (PN-Li) ou une composition (C') comprenant au moins un matériau à base de pernigraniline dopée au lithium (PN-Li).

**3.** Procédé selon la revendication 2, dans lequel la solution de déprotonation comprend en outre un composé organique $OC_2$ qui est soluble dans ledit solvant aprotique et qui comprend un groupe fonctionnel alcène.

**4.** Procédé selon la revendication 2 ou 3, dans lequel le composé organique lithié $Li-OC_1$ est choisi parmi les lithium-amides, les énolates de lithium, les énolates d'ester de lithium, les acétylures de lithium, les composés organiques du lithium, et leurs mélanges.

**5.** Procédé selon l'une quelconque des revendications 2 à 4, dans lequel le précurseur $PR_1$ du composé organique lithié $Li-OC_1$ est le lithium métallique (Li) et le précurseur PR2 du composé organique lithié $OC_1$ est l'un quelconque

des acides conjugués suivants d'$OC_1$ : une amine, une cétone, un ester, un alcyne ou un halogénure d'alkyle.

**6.** Matériau d'électrode positive comprenant :

- au moins un liant polymère,
- éventuellement un matériau conférant une conduction électronique autre que PN-Li,
- éventuellement un matériau actif autre que PN-Li, et

qui comprend en outre un matériau de pernigraniline dopée au lithium PN-Li tel que défini dans la revendication 1 ou tel que préparé conformément au procédé tel que défini dans l'une quelconque des revendications 2 à 5.

**7.** Matériau d'électrode positive selon la revendication 6, dans lequel ledit matériau d'électrode positive est un matériau d'électrode positive du type batterie au lithium comprenant, par rapport au poids total du matériau d'électrode positive :

- de 60 % en poids à 98 % en poids de PN-Li,
- de 1 % en poids à 15 % en poids d'un matériau conférant une conduction électronique autre que PN-Li, et
- de 1 % en poids à 15 % en poids d'un liant polymère ;

et dans lequel ledit matériau d'électrode positive ne comprend aucun matériau actif autre que PN-Li.

**8.** Matériau d'électrode positive selon la revendication 6, lequel matériau d'électrode positive est un matériau d'électrode positif de type supercondensateur comprenant, par rapport au poids total du matériau d'électrode positive :

- de 35 % en poids à 60 % en poids de PN-Li,
- de 15 % en poids à 60 % en poids d'un matériau conférant une conduction électronique autre que PN-Li ayant une surface spécifique élevée située dans la plage allant de 400 $m^2/g$ à 3000 $m^2/g$, et
- de 1 % en poids à 15 % en poids d'un liant polymère ;

et lequel matériau d'électrode positive ne comprend aucun matériau actif autre que PN-Li.

**9.** Matériau d'électrode positive selon la revendication 6, qui est un matériau d'électrode positive composite de type batterie au lithium comprenant de 60 % en poids à 96 % en poids d'un matériau actif autre que PN-Li par rapport au poids total du matériau d'électrode positive.

**10.** Procédé de préparation d'un matériau d'électrode positive tel que défini dans l'une quelconque des revendications 6 à 9, lequel procédé comprend au moins les étapes suivantes consistant à :

A) préparer une composition comprenant de la polyaniline (P), au moins un liant polymère, éventuellement un matériau conférant une conduction électronique autre que PN-Li, et éventuellement un matériau actif autre que PN-Li, et
B) préparer une composition comprenant au moins un matériau à base de pernigraniline dopée au lithium (PN-Li) à partir de la composition de l'étape A), conformément au procédé de préparation tel que défini dans l'une quelconque des revendications 2 à 5.

**11.** Batterie au lithium comprenant :

- un matériau d'électrode positive,
- un matériau d'électrode négative,
- un séparateur qui agit comme un isolateur électrique et permet le transport d'ions, et
- un électrolyte non aqueux comprenant au moins un sel de lithium et un solvant aprotique, et

dans laquelle le matériau d'électrode positive est un matériau d'électrode positive de type batterie ou un matériau d'électrode positive composite de type batterie tel que défini dans la revendication 7 ou la revendication 9, ou préparé conformément au procédé de préparation tel que défini dans l'une quelconque des revendications 2 à 5.

**12.** Supercondensateur comprenant :

- un matériau d'électrode positive,
- un matériau d'électrode négative,
- un séparateur qui agit comme un isolateur électrique et permet le transport d'ions, et
- un électrolyte non aqueux comprenant au moins un sel de lithium et un solvant aprotique, et

dans lequel le matériau d'électrode positive est un matériau d'électrode positive de type supercondensateur tel que défini dans la revendication 8 ou préparé conformément au procédé de préparation tel que défini dans l'une quelconque des revendications 2 à 5.

**13.** Membrane autoportante comprenant, par rapport au poids total de la membrane :

- de 2 % en poids à 15 % en poids d'un liant polymère, et
- qui comprend en outre de 85 % en poids à 98 % en poids de PN-Li telle que définie dans la revendication 1 ou préparée conformément au procédé tel que défini dans l'une quelconque des revendications 2 à 5.

**14.** Procédé pour la préparation d'une membrane telle que définie dans la revendication 13, lequel procédé comprend au moins les étapes suivantes consistant à :

i) préparer une composition comprenant de la polyaniline (P) et au moins un liant polymère sous la forme d'un film,
ii) préparer une composition comprenant au moins un matériau à base de pernigraniline dopée au lithium (PN-Li) à partir de la composition de l'étape i), conformément au procédé de préparation tel que défini dans l'une quelconque des revendications 2 à 5.

**15.** Matériau à base de pernigraniline dopée au lithium (PN'-Li) comprenant :

- au moins une chaîne polymère formée par la succession de cycles $C_6H_4$ et d'atomes d'azote, chaque atome d'azote étant lié en position para par rapport à chaque cycle $C_6H_4$ ;
- n motifs répétitifs ;
- une quantité totale X de cations lithium ($Li^+$) ;
- une quantité moyenne x de cations lithium ($Li^+$) par motif répétitif, avec x = X/n ;
- une quantité totale Y d'anions ($A^{m-}$) ;
- une quantité moyenne y de charge fournie par les anions ($A^{m-}$) par motif répétitif, avec y = mY/n ;
- une charge q de chaque motif répétitif,
- une charge totale Q de la chaîne polymère, avec $Q = \sum^{n} q_i$, et Q = mY-X puisque Q est compensé par les charges de $Li^+$ et $A^{m-}$ ;
- Q/n représente l'état d'oxydation formel et Q/n = y-x ; et

dans lequel ladite PN-Li correspond à la formule (II) suivante :

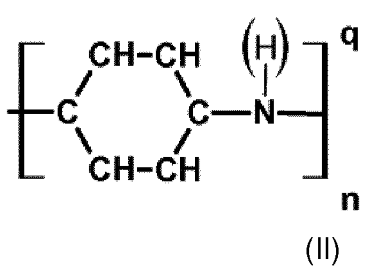

X $Li^+$ Y $A^{m-}$

(II)

dans laquelle :

* $4 \leq n \leq 500\,000$,
*q est égal à -1, 0 ou +1,
* le rapport atomique hydrogène/azote (H/N) est tel que $4 \leq H/N < 4,5$,
* $0 \leq Q/n \leq 1$,
* $0,1 < x < 0,5$,

* $0,5 < y \leq 1$.

**16.** Procédé pour la préparation d'un matériau à base de pernigraniline dopée au lithium (PN'-Li) tel que défini dans la revendication 15, qui comprend au moins l'étape consistant à soumettre à une charge une batterie telle que définie dans la revendication 11 ou un supercondensateur tel que défini dans la revendication 12.

**17.** Utilisation du matériau à base de pernigraniline dopée au lithium PN-Li tel que défini dans la revendication 1 ou préparé conformément au procédé tel que défini dans l'une quelconque des revendications 2 à 5, en tant que matériau actif dans des électrodes, en tant que liant, ou en tant qu'agent conducteur, dans des batteries, des supercondensateurs, des dispositifs électroniques et/ou optoélectroniques tels que des cellules solaires, des photoconducteurs, des dispositifs luminescents ou électrochromiques, des transistors à effet de champ, des absorbeurs de rayonnement électromagnétique, des capteurs de gaz, des membranes de séparation, des revêtements antistatiques, des fils moléculaires conducteurs et des revêtements anticorrosion.

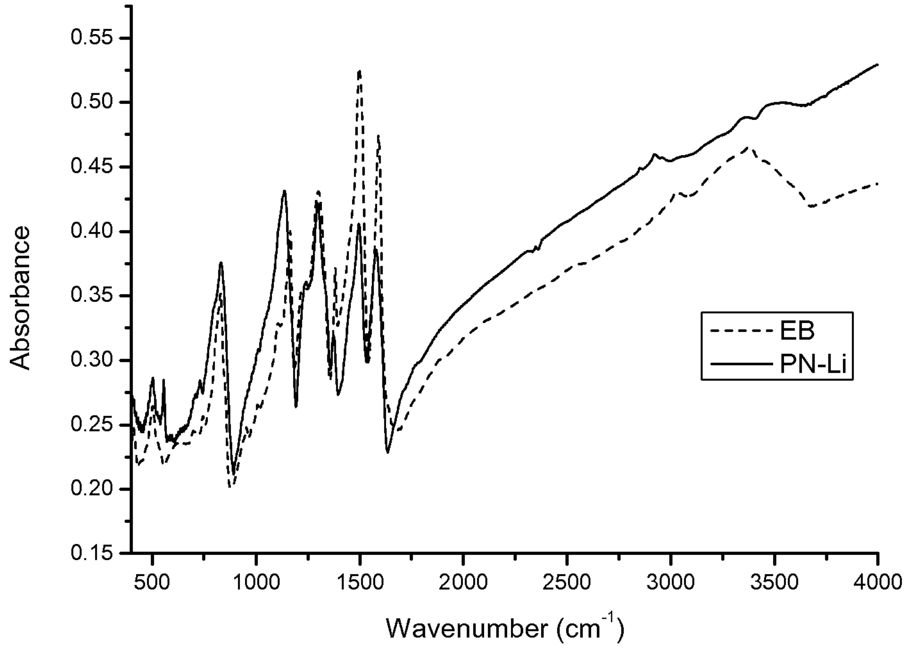
Absorbance
0.55
0.50
0.45
0.40
0.35
0.30
0.25
0.20
0.15
500
1000
1500
2000
2500
3000
3500
4000
Wavenumber ($cm^{-1}$)
EB
PN-Li

**FIG.1**

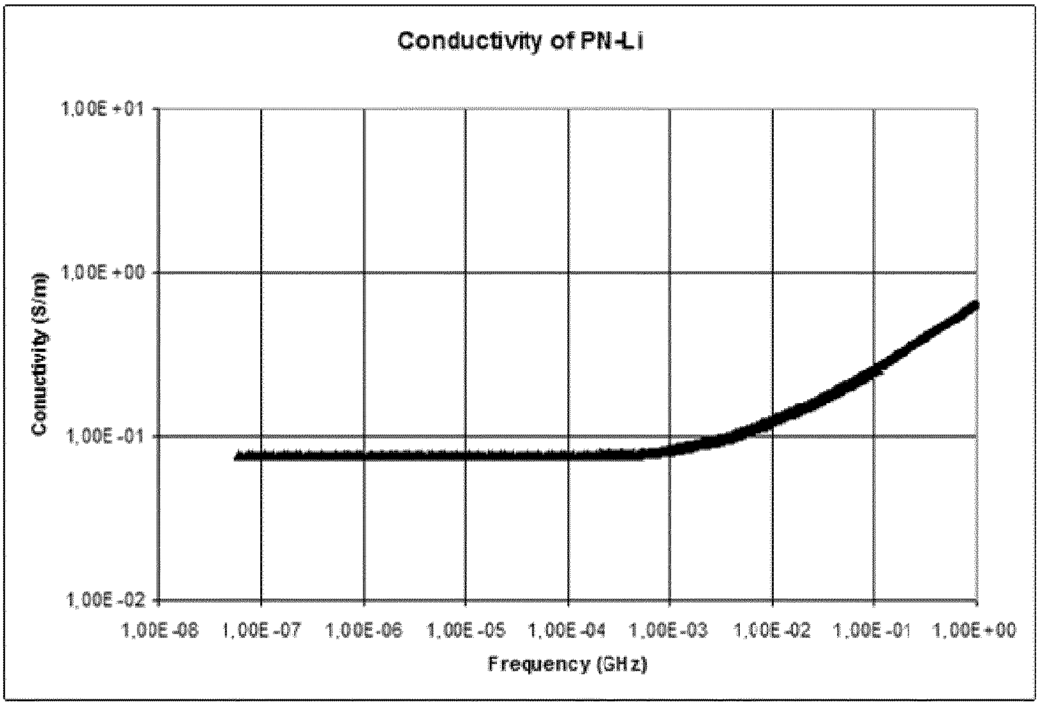
Conductivity of PN-Li
Conuctivity (S/m)
1,00E+01
1,00E+00
1,00E-01
1,00E-02
1,00E-08
1,00E-07
1,00E-06
1,00E-05
1,00E-04
1,00E-03
1,00E-02
1,00E-01
1,00E+00
Frequency (GHz)

**FIG.2**

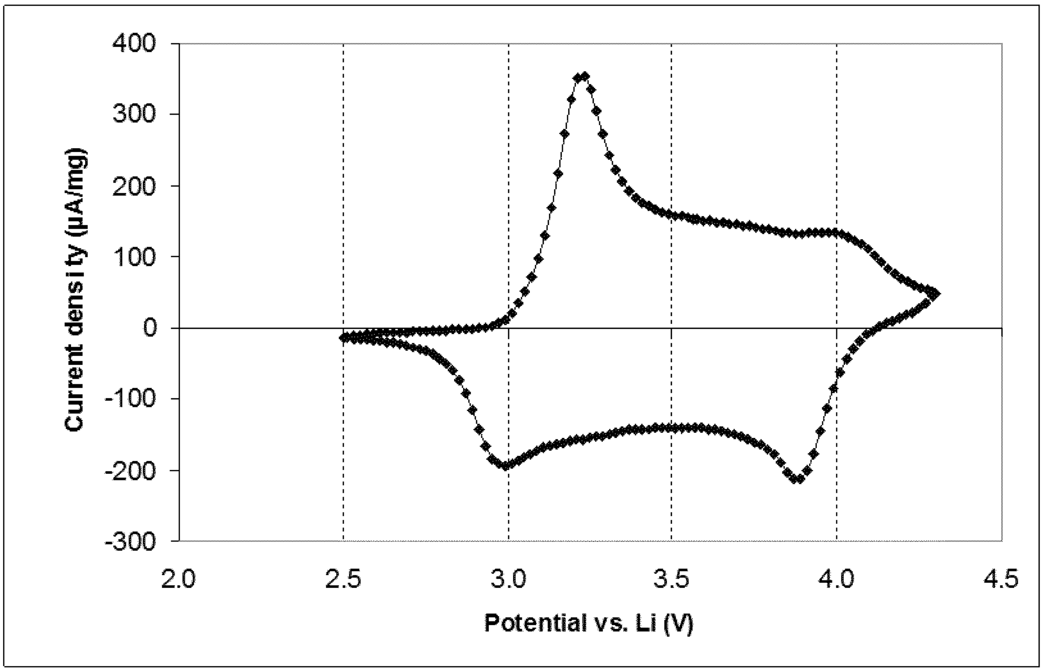
400
300
200
100
0
-100
-200
-300
Current density (µA/mg)
2.0
2.5
3.0
3.5
4.0
4.5
Potential vs. Li (V)

FIG.3

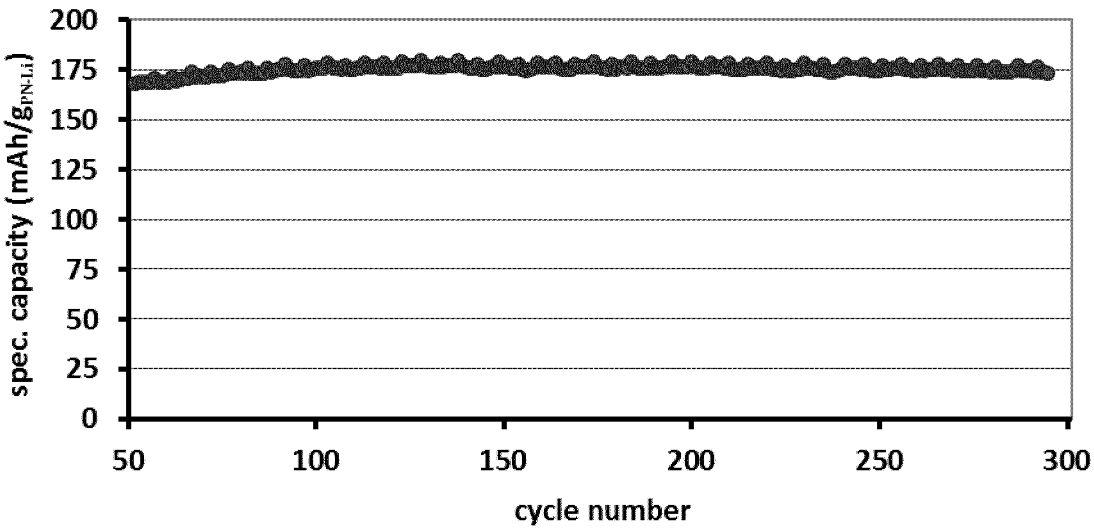
200
175
150
125
100
75
50
25
0
spec. capacity (mAh/g$_{PN-Li}$)
50
100
150
200
250
300
cycle number

FIG.4

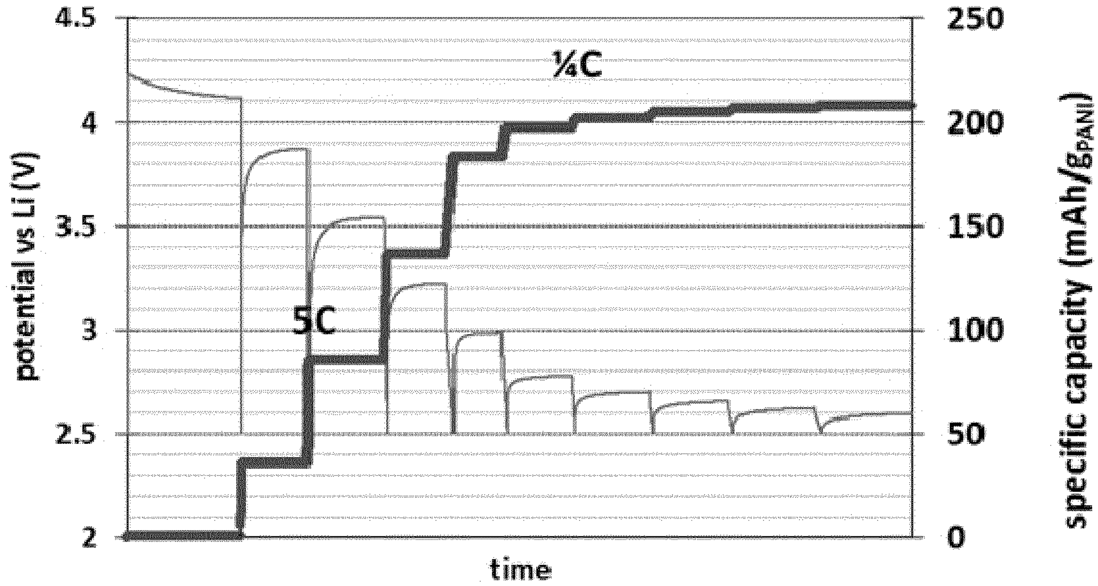
4.5
4
3.5
3
2.5
2
potential vs Li (V)
¼C
5C
time
250
200
150
100
50
0
specific capacity (mAh/g$_{PANI}$)

FIG.5

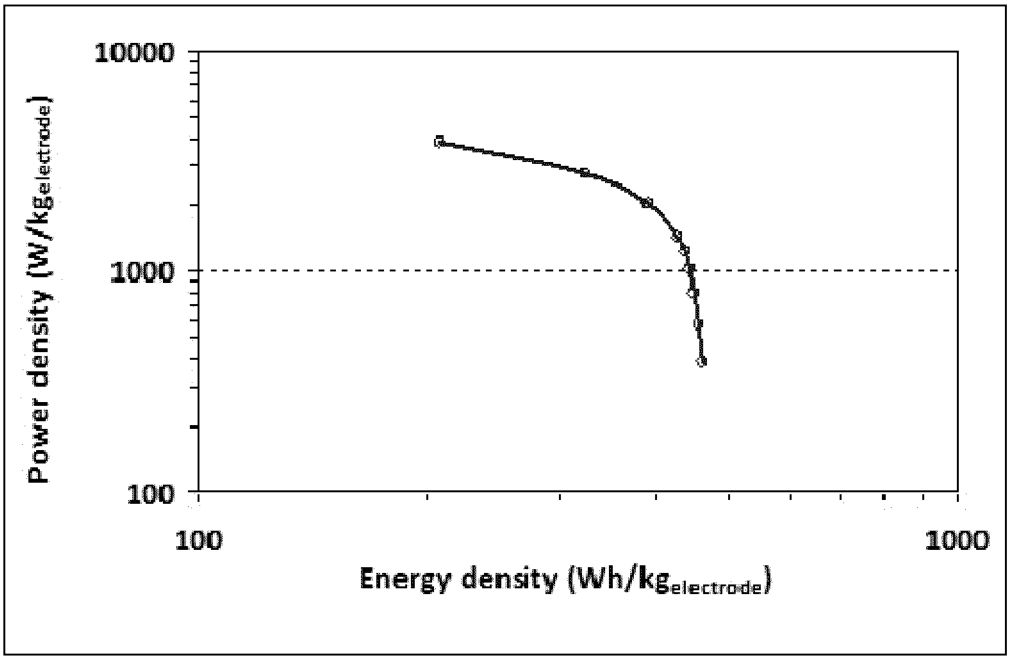
10000
1000
100
Power density (W/kg$_{electrode}$)
100
1000
Energy density (Wh/kg$_{electrode}$)

FIG.6

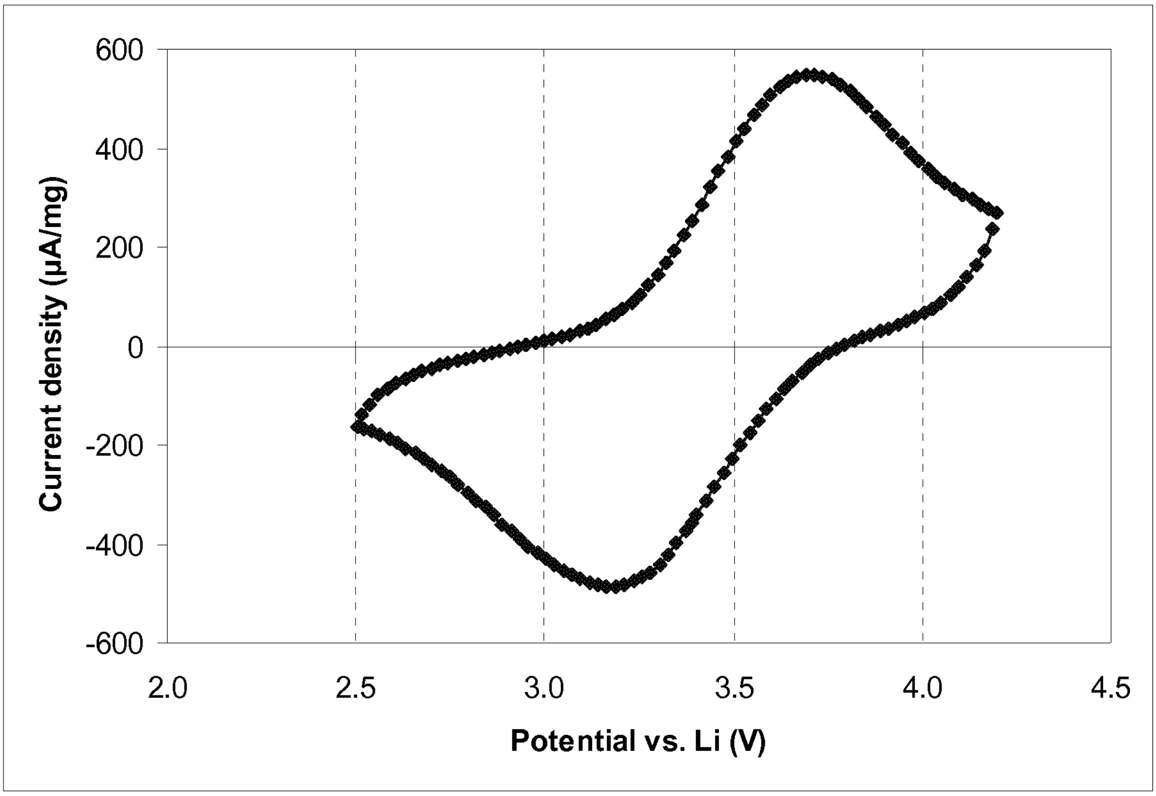
600
400
200
0
-200
-400
-600
Current density (µA/mg)
2.0
2.5
3.0
3.5
4.0
4.5
Potential vs. Li (V)

FIG.7

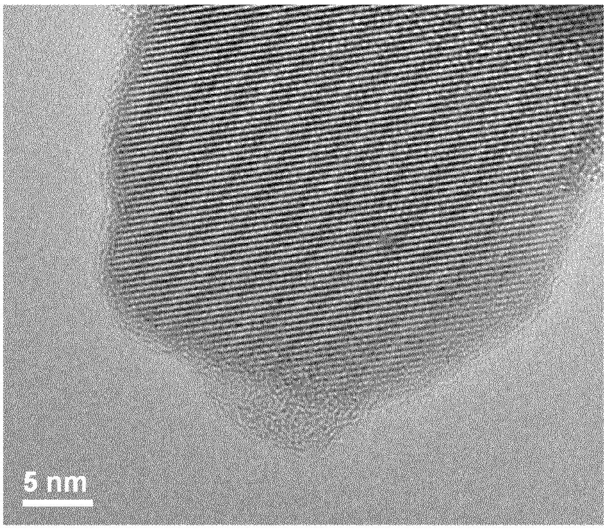
5 nm

FIG.8

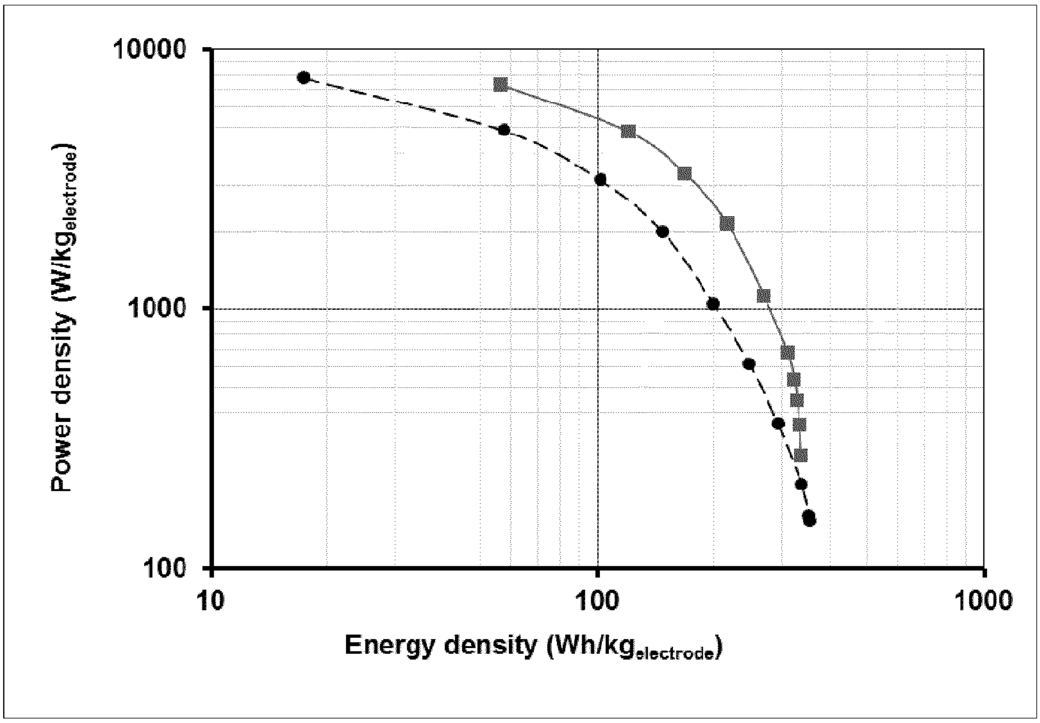
10000
1000
100
10
100
1000
Power density (W/kg$_{electrode}$)
Energy density (Wh/kg$_{electrode}$)

FIG.9

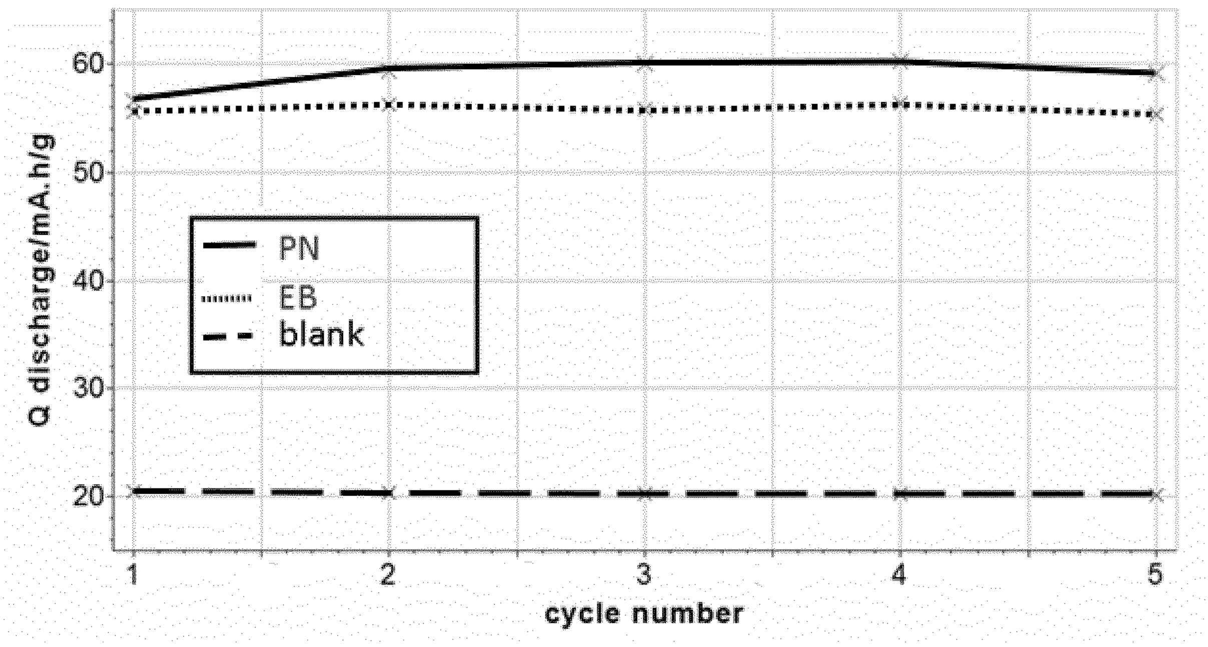
60
50
40
30
20
Q discharge/mA.h/g
PN
EB
blank
1
2
3
4
5
cycle number

FIG.10

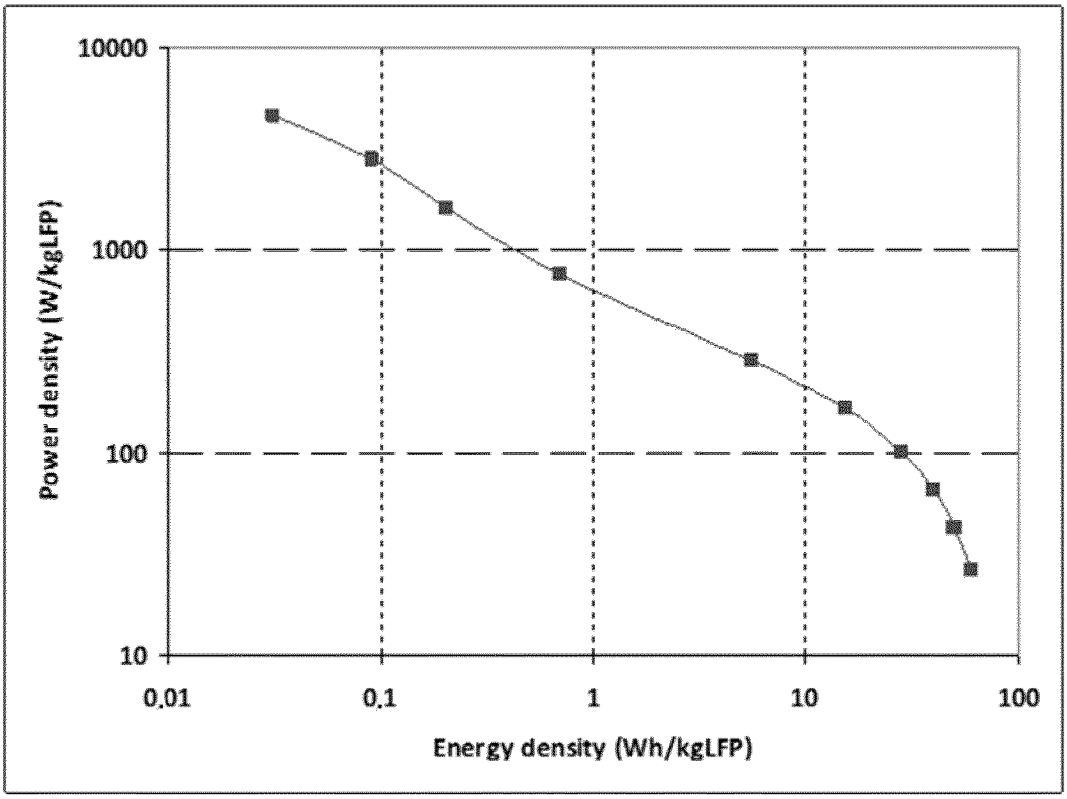
10000
1000
100
10
Power density (W/kgLFP)
0,01
0,1
1
10
100
Energy density (Wh/kgLFP)

FIG.11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **SUN et al.** *J. Chem. Soc., Chem. Comm.,* 1990, 529
- **MANUEL et al.** *Material Research Bulletin,* 2010, vol. 45, 265
- **JIMÉNEZ et al.** *Macromol. Rapid Comm.,* 2009, vol. 30 (6), 418-422